Europäisches Patentamt

European Patent Office

Office européen des brevets

(11) Veröffentlichungsnummer: **0 031 105 B1**

(12) **EUROPÄISCHE PATENTSCHRIFT**

(45) Veröffentlichungstag der Patentschrift:
06.07.83

(21) Anmeldenummer: 80107872.6

(22) Anmeldetag: 12.12.80

(51) Int. Cl.³: **B 21 B 39/00, B 21 B 43/00, B 65 G 54/02**

(54) Einrichtung zum Geschwindigkeitsändern von walzwarmem Walzgut auf Förderrollgängen von Kühlbetten durch magnetische Felder.

(30) Priorität: 24.12.79 DE 2952361
20.09.80 DE 3035573

(43) Veröffentlichungstag der Anmeldung:
01.07.81 Patentblatt 81/26

(45) Bekanntmachung des Hinweises auf die Patenterteilung:
06.07.83 Patentblatt 83/27

(84) Benannte Vertragsstaaten:
AT BE CH DE FR GB IT LI LU NL SE

(56) Entgegenhaltungen:
DD-A-64 676
DD-A-126 614
DE-A-1 756 872
DE-A-1 959 873
DE-A-2 007 709
DE-A-2 013 746
DE-A-2 325 327
DE-A-2 504 448
DE-A-2 811 529
US-A-3 675 757

(73) Patentinhaber: SMS SCHLOEMANN-SIEMAG AKTIENGESELLSCHAFT, Steinstrasse 13,
D-4000 Düsseldorf 1 (DE)

(72) Erfinder: Küppers, Richard, Schlossstrasse 16,
D-4048 Grevenbroich (DE)
Erfinder: Feldmann, Hugo, Dr., Teutonenstrasse 11,
D-5110 Alsdorf-Warden (DE)
Erfinder: Block, Franz-Rudolf, Dr., Kalfstrasse 58,
D-5106 Roettgen (DE)
Erfinder: Bernhardt, Jürgen, Ostendorf-Strasse 6,
D-4000 Düsseldorf 1 (DE)
Erfinder: Nobis, Dieter, Am Baldhof 31, D-4040 Neuss
(DE)

(74) Vertreter: Pollmeier, Felix et al, Patentanwälte
Hemmerich-Müller-Grosse-Pollmeier Berliner Allee 41,
D-4000 Düsseldorf 1 (DE)

## Einrichtung zum Geschwindigkeitsändern von walzwarmem Walzgut auf Förderrollgängen vor Kühlbetten durch magnetische Felder

Die Erfindung betrifft eine Einrichtung zum Geschwindigkeitsändern von auf Förderrollgängen aufliegendem walzwarmem Walzgut vor Kühlbetten durch magnetische Felder, wobei im Bereich der einer Feinstahl- oder Mittelstahl-Walzstraße nachgeordneten Adjustageanlage die Walzgutlängen durch elektromagnetische Kraftwirkung abbremsbar sind.

Durch die DD-A-64 676 ist bereits bekannt, mit elektromagnetischen Feldern walzwarme Walzgutlängen auf einem Förderrollgang aufliegend im Bereich der einer Stab-Walzstraße nachgeordneten Adjustageanlage zu verzögern. Dabei wird die Walzgutlänge durch ein starkes statisches Magnetfeld geleitet, wodurch in der Walzgutlänge eine Wirbelstrombremsung erfolgt. Das magnetische Kraftfeld ist dabei in seiner Intensität veränderbar, indem die Höhe des Erregerstromes des Elektromagneten einstellbar ist. Infolge des bei hohen Temperaturen vergrößerten elektrischen Widerstandes der Walzgutlängen führt die Wirbelstrombremsung hierbei jedoch nur bei sehr starken Magnetfeldern zu einigermaßen brauchbaren Bremseffekten. Demzufolge war der Bedarf an elektrischer Leistung zur Speisung der Erregerspule des Elektromagneten unverhältnismäßig hoch, so daß aus diesem Grund schon ein wirtschaftlicher Einsatz einer solchen Einrichtung sich in der Praxis nicht durchsetzen konnte.

Durch die DE-A-1 756 872 ist eine Einrichtung zum Zufördern von Fördergut unter Beschleunigen oder Abbremsen mittels Linearmotoren zu einer Nachfolgeeinrichtung auf einem nicht angetriebenen Förderrollgang aufliegend bekannt. Dabei können die Linearmotoren längs der Förderlinie in horizontaler oder vertikaler Ebene einseitig oder beiderseitig der Förderebene bzw. eines Rollganges angeordnet sein. Auch ist bereits vorgeschlagen worden, die Linearmotoren mit einem geschlossenen, ringförmigen Querschnitt auszubilden, wobei die Walzgutlängen in der Förderbewegung die innere Durchtrittsöffnung der Linearmotoren passieren.

Weiter ist durch die DE-A-2 013 746 eine Einrichtung bekannt, bei welcher unter Verwendung von Linearmotoren im Bereich von Metallscheren abgeteilte Blechtafeln gefördert oder auf der Auflageebene gedreht einer weiteren Schere zugeführt werden.

Die US-A-3 675 757 hat die bauliche Ausbildung von Linearmotoren und deren Steuerung zum Gegenstand, um Fördergut beispielsweise Bleche, in unterschiedlicher Lage längs einer Führungsbahn ohne mechanische Mittel zu bewegen. Die Linearmotoren sind an der dem Fördergut zugewandten Seite kammartig ausgebildet.

Aufgabe der Erfindung ist es, eine Einrichtung vorzuschlagen, die es ermöglicht, die auf einem Förderrollgang von einer vorgeordneten Walzstraße einer nachgeordneten Adjustageanlage zugeförderten walzwarmen Walzgutlängen durch eine zusätzliche berührungslose Teilbremsung vorzeitig bis zum Stillstand abzubremsen und damit die Bremswege der Walzgutlängen vor dem Überleiten auf ein Kühlbett zu verkürzen. Auch soll die Einrichtung zum Beschleunigen von Walzgutlängen im Bereich der Teilschere von Adjustageanlagen verwendbar sein. Schließlich soll die Führung des Walzgutes im Bereich von Linearmotoren bei optimaler Ausnutzung der Kraftwirkung verbessert werden.

Zur Lösung der gestellten Aufgabe wird eine Einrichtung vorgeschlagen, mit welcher die Walzgutlängen mittels im Bereich der Adjustageanlage angeordneter Linearmotoren in einem Bereich beschleunigbar und/oder in einem anderen Bereich längs der Förderlinie abbremsbar sind, die Linearmotoren zur Förderlinie anstellbar bzw. bewegbar ausgebildet sind und das Abbremsen der Walzgutlängen aus einer kombinierten Bremsung, zusammengesetzt aus mechanischem und elektromagnetischem Bremsanteil, erfolgt.

In Weiterbildung der Erfindung sind verschiedene Ausführungen der Einrichtung möglich.

Eine Einrichtung besteht darin, daß die Linearmotoren bei Förderrollgängen von Walzgutteillängen in der Rollenteilung längs der Förderlinie eines Rollgangs in horizontaler oder vertikaler Ebene einseitig oder beiderseitig der Förderebene angeordnet sind.

Bei einer weiteren Einrichtung sind in der Rollenteilung des Förderrollgangs oder zwischen Förderrollgang und Kühlbett längs der Förderlinie in horizontaler Ebene einseitig oder beiderseitig die Linearmotoren schräg zur Förderlinie angeordnet.

Die Linearmotoren können im Bereich des Förderrollgangs oder zwischen Förderrollgang und Kühlbett längs der Förderlinie angeordnet sein.

In weiterer Ausbildung der Erfindung sind bei in horizontaler oder vertikaler Ebene einseitig oder beiderseitig zur Förderlinie angeordneten Linearmotoren mindestens die oberen oder die seitlich der Förderlinie angeordneten Liniearmotoren zur bzw. in der Förderebene anstellbar ausgebildet. Weiter sind die Linearmotoren im Bereich der Rollenteilung des Förderrollgangs vor und/oder hinter der der Walzstraße nachgeordneten Teilschere zum Beschleunigen der Walzgutlängen oder der Hinterschopfenden angeordnet.

In weiterer Ausbildung der Erfindung sind die Linearmotoren im Bereich der Rollenteilung des Auflaufrollganges wahlweise in einem oder mehreren parallelen Längsabschnitten vor und/oder im Bereich des Kühlbettes hinter den Trennmitteln der aufeinanderfolgenden Walzgutlängen zum kombinierten Abbremsen oder zur Teilbremsung gemeinsam mit mechanischen Bremsmitteln heb- und senkrecht zusammenwirkend angeordnet. Die Linearmotoren können ebenfalls im Bereich der einen oder mehreren Bremsschieberabschnitte angeordnet werden.

Eine weitere Einrichtung besteht darin, daß die Linearmotoren in Längsrichtung und/oder schräg zur Förderrichtung im Bereich des Richtplattenrostes zwischen dem Auflaufrollgang und dem Kühlbett angeordnet sind. Weiter können in dem Auflaufrollgang des Kühlbettes abwechselnd in den Rollenteilungen ein oder mehrere Abschnitte gruppenweise mit Bremsschiebern und/oder mit Linearmotoren ausgestattet werden. Die Linearmotoren sind jeweils vorzugsweise paarweise zur Förderebene zustellbar und gemeinsam über die Förderebene anhebbar. In dem Auflaufrollgang des Kühlbettes in den Rollenteilungen können ausschließlich Linearmotoren einzeln oder paarweise angeordnet werden. Als Zustellmittel der paarweise einander zugeordneten Linearmotoren sind hydraulische bzw. pneumatische Kolben-Zylindereinheiten bzw. elektromechanische oder mechanische Stellmittel und über diese betätigbare Hebel, Exzenter oder dergleichen Betätigungsmittel vorgesehen. Die oberhalb oder seitlich der Förderlinie angeordneten Linearmotoren sind nach oben seitlich zum Förder- bzw. Auflaufrollgang hin ausschwenkbar ausgebildet. Die Linearmotoren sind zur Förderebene hin kammartig ausgebildet, und die Kämme bzw. die die Stege der Kämme bildenden Teile sind quer zur Förderrichtung bzw. schräg verlaufend ausgebildet und können mit Polschuhen bzw. unmagnetischen und/oder nicht leitenden Führungsschuhen versehen werden. Der untere Linearmotor ist möglicherweise bereits vor Einlaufen der Walzgutlänge in die Förderebene angehoben, um eine sichere Stabführung zu gewährleisten. Die Änderung des elektromagnetischen Wanderfeldes der Linearmotoren erfolgt abhängig von der zu erzielenden Brems- und/oder Beschleunigungskraft der Walzgutlänge.

Die Steuerung der Linearmotoren erfolgt über die Erregung der Linearmotoren abhängig von der Walzgutgeschwindigkeit über einen Umrichter mit veränderlicher Frequenz. Die Steuerung des elektromagnetischen Wanderfeldes der Linearmotoren hinsichtlich seiner die Walzgutlängen beschleunigenden oder abbremsenden Wirkrichtung kann auch über eine Reversier-Schütz-Steuerung umsteuerbar ausgebildet sein.

Eine weitere Einrichtung besteht darin, daß in der Auflaufrinne bzw. in der Rollenteilung des Auflaufrollgangs längs der Förderlinie, die Förderlinie umschließend ringförmige Linearmotoren angeordnet sind.

Als weiteres Merkmal der Erfindung sind die ringförmigen Linearmotoren abhängig von dem Walzgutquerschnitt und/oder von der Walzgutgeschwindigkeit aus der Förderlinie ausbringbar.

Längs der Auflaufrinne bzw. in der Rollenteilung längs der Förderlinie sind mehrere ringförmige Linearmotoren angeordnet. Abhängig von dem Walzgutquerschnitt und/oder von der Walzgutgeschwindigkeit sind die Walzgutlängen entweder in eine mit ringförmigen Linearmotoren und Rohrführungen ausgebildete Auflaufrinne oder in einen gleichgerichteten Auflaufrollgang mit Bremsschiebern in der Rollenteilung wahlweise umleitbar.

In dem Auflaufrollgang sind in die Förderlinie im Bereich der Rollenteilung wechselweise ringförmige Linearmotoren oder Plattenbeläge einbringbar. Auch können mehrere Auflaufrinnen mit ringförmigen Linearmotoren parallel zueinander angeordnet werden.

Zu den weiteren Merkmalen der Erfindung wird auf die weiteren Unteransprüche in Verbindung mit der Beschreibung verwiesen.

Vorteil der verschiedenen Einrichtungen ist, daß insbesondere im Bereich der Adjustageanlagen hinter Walzstraßem die walzwarmen Walzgutlängen sowohl im Bereich der Kühlbettschere und deren Hinterschopfenden berührungslos beschleunigt werden können und/oder ein zusätzliches Teilbremsen oder ein ausschließliches Abbremsen mittels der Linearmotoren im Bereich des Auflaufrollgangs vor Kühlbetten oder im Bereich des Richtplattenrostes berührungslos unter relativ geringem Aufwand möglich ist. Dadurch wird der Bremsweg der Walzgutlängen verkürzt, so daß bei größeren Auflaufgeschwindigkeiten die Länge des Auflaufrollgangs und der Kühlbetten in vertretbaren Abmessungen gehalten werden können. Auf die verschiedenen Ausführungsformen im Rahmen der Erfindung wird auf die Beschreibung und die dazugehörigen Zeichnungen verwiesen.

Die Erfindung hat den weiteren Vorteil, daß Linearmotoren mit ringförmigem Querschnitt die magnetische Kraftwirkung zum Beschleunigen bzw. Abbremsen der Walzgutlängen erheblich erhöhen und darüber hinaus den Walzgutlängen eine bessere Führung im Bereich der Linearmotoren geben als dieses bei flachen Linearmotoren der Fall ist.

Da die ringförmigen Linearmotoren nicht zum Beschleunigen und/oder Abbremsen der Walzgutlängen des gesamten Walzprorammes geeignet sind, wird der Aufrollgang derart ausgebildet, daß die ringförmigen Linearmotoren aus dem Bereich der Rollenteilung wahlweise ausbringbar und dafür Plattenbeläge oder Ersatzführungen einsetzbar sind.

Andererseits besteht die Möglichkeit mit mehreren parallelen Förderlinien von Auflaufrinnen mit Rohrführungen und ringförmigen Linearmotoren sowie einem Auflaufrollgang konventioneller Ausführung zu arbeiten, wobei die Teillängen wahlweise abhängig vom Walzgutquerschnitt und/oder der Walzgutgeschwindigkeit entweder in die Auflaufrinne oder auf den Auflaufrollgang übergeleitet und dem nachgeordneten Kühlbett bzw. der Adjustageanlage zugeführt werden. Die mehreren Auflaufrinnen können dem konventionellen Auflaufrollgang in horizontaler oder vertikaler Ebene zugeordnet sein.

Ausführungsbeispiele der Erfindung sind in der Zeichnung dargestellt. Es zeigt

Fig. 1 die prinzipielle Anordnung von paarweise zur Förderebene angeordneten und zu dieser anstellbaren Linearmotoren in einem Auflaufrollgang in der Seitenansicht ausschnittsweise schematisch,

Fig. 1a die Anordnung von paarweise zur Förderebene beweglich angeordneten Linearmotoren nach Fig. 1 im Prinzip,

Fig. 1b die Anordnung von paarweise oberhalb der Förderebene beweglich und unterhalb dieser ortsfest angeordneten Linearmotoren nach Fig. 1 im Prinzip,

Fig. 2 die Anordnung von jeweils unterhalb der Förderebene angeordneten und zu dieser anstellbaren Linearmotoren nach Fig. 1,

Fig. 3 die Anordnung von jeweils oberhalb der Förderebene angeordneten und zu dieser anstellbaren Linearmotoren und unterhalb dieser angeordneten ortsfesten oder beweglichen Plattenführungen in einem Auflaufrollgang in der Seitenansicht ausschnittweise schematisch,

Fig. 4 den Auflaufrollgang mit paarweise in senkrechter Ebene zur Förderebene anstellbaren Linearmotoren im Querschnitt im Prinzip,

Fig. 5 den Auflaufrollgang mit einseitig in horizontaler Ebene zur Förderebene anstellbaren Linearmotoren im Querschnitt im Prinzip,

Fig. 6 die Anordnung von Linearmotoren im Förderrollgang im Bereich vor und/oder hinter der Teilschere in der Draufsicht im Prinzip,

Fig. 7 die Anordnung von abwechselnd paarweise angeordneten Linearmotoren und Bremsschiebern im Auflaufrollgang vor und/oder neben dem Kühlbett in der Seitenansicht im Prinzip,

Fig. 8 die Anordnung von Gruppen ausschließlich paarweise angeordneten Linearmotoren im Auflaufrollgang vor und/oder neben dem Kühlbett in der Seitenansicht im Prinzip,

Fig. 9 die Anordnung von Linearmotoren nach Fig. 7 oder 8 im Bereich des Auflaufrollgangs vor und/oder neben dem Kühlbett im Querschnitt im Prinzip,

Fig. 10 die Anordnung von Linearmotoren in vertikaler Ebene im Richtplattenrost zwischen Auflaufrollgang und Kühlbett im Querschnitt im Prinzip,

Fig. 11 die Anordnung von Linearmotoren im Auflaufrollgang von Kühlbetten mit zwei oder mehr nebeneinanderliegenden Bremsschieberabschnitten im Querschnitt im Prinzip,

Fig. 12 die Anordnung von paarweise angeordneten Linearmotoren längs der festen Auflaufrinne sowie des Bremsschieberabschnittes im Auflaufrollgang vor und/oder im Bereich neben dem Kühlbett im Querschnitt im Prinzip,

Fig. 13 die Anordnung von beiderseits des Bremsschieberabschnittes angeordneten Linearmotoren im Auflaufrollgang des Kühlbettes im Prinzip,

Fig. 14 die Anordnung von Linearmotoren im Bereich des Auflaufrollgangs des Kühlbettes hinter den Trennmitteln und/oder im Bereich neben dem Kühlbett im Bremsschieberabschnitt in der Draufsicht schematisch,

Fig. 15 die Anordnung und Beschaltung der Ständerwicklungen des Linearmotors mit Drehstrom in der Draufsicht im Prinzip,

Fig. 16 die Schaltung eines Linearmotores über einen Umrichter mit veränderlicher Frequenz im Prinzip,

Fig. 17 die Schaltung eines Linearmotores mit umsteuerbarem Wanderfeld über eine Reversier-Schütz-Steuerung im Prinzip,

Fig. 18 eine geschlossene Auflaufrinne mit Paaren von Linearmotoren vor Hochgeschwindigkeits-Kühlbetten im Querschnitt schematisch,

Fig. 19 die Anordnung eines ringförmigen Linearmotors in der Förderlinie in der Seitenansicht,

Fig. 20 die Anordnung eines ringförmigen Linearmotors in der Förderlinie in der Voreransicht,

Fig. 21 die Anordnung von ringförmigen Linearmotoren im Auflaufrollgang mit wechselweise einbringbaren Plattenbelägen,

Fig. 22 die Anordnung von mehreren parallelen Förderlinien mit ringförmigen Linearmotoren und Auflaufrollgang in vertikaler Anordnung in der Seitenansicht und

Fig. 23 die Anordnung von mehreren parallelen Förderlinien mit Auflaufrinnen mit ringförmigen Linearmotoren und Auflaufrollgang in horizontaler Anordnung in der Draufsicht.

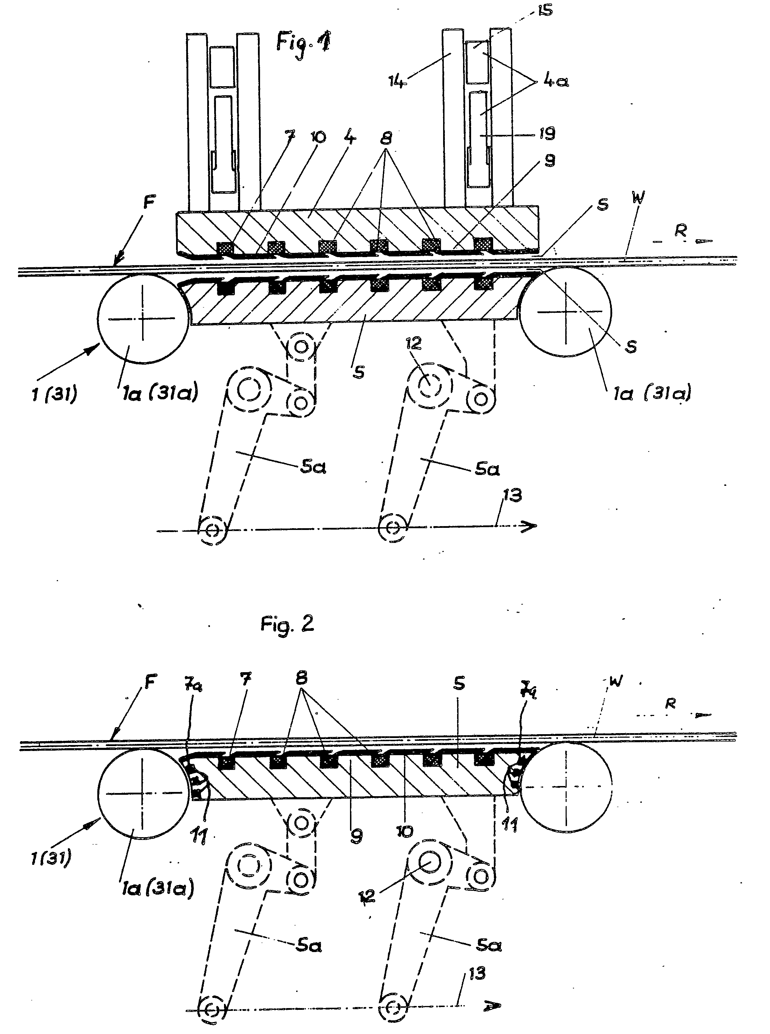

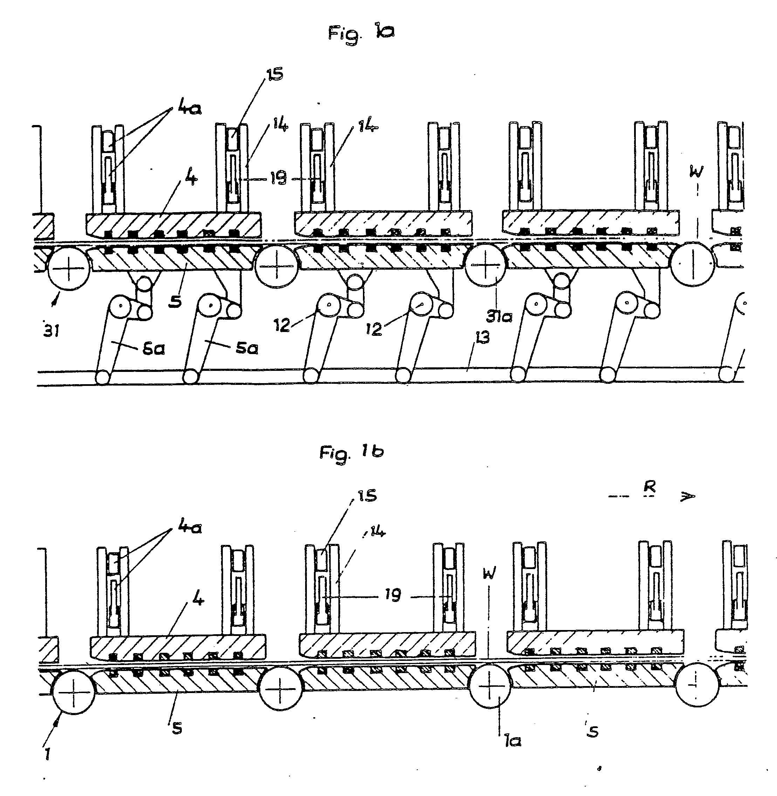

In den Fig. 1, 2 und 3 sind schematisch Ausführungsbeispiele zum Abbremsen und/oder Beschleunigen von walzwarmen Walzgutlängen im Temperaturbereich von ca. 800°C bis 1000°C im Bereich von Adjustageanlagen von Walzstraßen dargestellt. Dazu werden im Bereich der Förderrollgänge vor und/oder hinter der Teilschere und im Bereich der Auflaufrollgänge vor und/oder neben dem Kühlbett durch Linearmotoren erzeugte elektromagnetische Wanderfelder auf die Walzgutlängen zur Einwirkung gebracht, wodurch in der Walzgutlänge elektrische Wirkbelströme wirksam werden, welche auf die Walzgutlänge je nach Schaltung der Ständerwicklungen der Linearmotoren eine, in Förderrichtung wirksame beschleunigende oder ein der Förderrichtung entgegengerichtet wirksame bremsende Kraftwirkung ausüben. Dazu können die Linearmotoren paarweise in vertikaler oder horizontaler Ebene einander gegenüberstehend (Doppel-Induktorkamm) bzw. oberhalb oder unterhalb der Förderebene (Einfach-Induktorkamm) ggf. mit einer magnetischen Rückschlußplatte zusammenwirkend angeordnet werden. Sofern die Linearmotoren oberhalb der Förderebene angeordnet sind, werden die die Rollenteilungen überbrückenden Plattenführungen als magnetische Rückschlußplatten verwendet. Auch ist der Betrieb der Linearmotoren ohne Verwendung einer magnetischen Rückschlußplatte möglich.

In der Fig. 1 ist ein Förderrollgang 1 bzw. ein Auflaufrollgang 31 im Bereich eines Kühlbettes im Prinzip ausschnittsweise dargestellt. Die Walzgutlänge W wird in Förderrichtung R, auf der die Förderebene F bildenden oberen Umfangsfläche der Förderrollen 1a bzw. 31a geführt. Anstelle der sich in den Rollenteilungen erstreckenden ortsfesten Plattenführungen im Förderrollgang 1 bzw. der heb- und senkbaren Bremsschieber BS im Bereich des Auflaufrollganges 31 des Kühlbetts K sind ebenfalls entweder ortsfeste oder, wie gestrichelt dargestellt, über Hubmittel 5a heb- und senkbare Linearmotoren 5 angeordnet, denen von oben her über Verstellmittel 4a bis auf einen Luftspalt S gegenüber der Oberfläche der Walzgutlänge W zustellbare Linearmotoren 4 zugeordnet sind. Die Linearmotoren 4, 5 weisen Nuten 7 auf, in welchen dreiphasig an eine Drehstromversorgung angeschlossene Ständerwicklungen 8 angeordnet sind. Die Linearmotoren 4, 5 erzeugen in ihren Ständerwicklungen 8 in bekannter Weise ein elektromagnetisches Wanderfeld, welches auf die Walzgutlänge W je nach Schaltung der Ständerwicklungen 8 eine in der Förderrichtung R oder dieser entgegengesetzte Kraftwirkung ausübt, welche auf die Walzgutlänge W bezüglich ihrer Förderbewegung beschleunigend oder abbremsend wirksam wird. Zur besseren Verteilung des magnetischen Flusses sind die Stege 9 zwischen den Nuten 7 der kammartig ausgebildeten Teile der Linearmotoren 4, 5 mit Polschuhen 10 und/oder mit magnetisch nicht leitenden Führungsschuhen versehen. Dadurch ist ein berührungsloses Abbremsen oder Beschleunigen der Walzgutlängen W möglich.

In den Fig. 1a und 1b sind Ausführungsbeispiele des Förderrollgangs 1 bzw. des Auflaufrollgangs 31 ausschnittweise im Prinzip dargestellt. In der Fig. 1a erfolgt die Anstellung der hintereinander in einer horizontalen Ebene angeordneten Linearmotoren 4 über mit diesen verbundene Verstellmittel 4a, beispielsweise über hydraulische oder pneumatische Kolben-Zylindereinheiten und mit diesen verbundenen schwenkbeweglichen Hebeln, während die Linearmotoren 5 über Winkelhebel 5a um Achsen 12 schwenkbeweglich, d. h. heb- und senkbar, sind, indem die freien Enden der Winkelhebel 5a an Zuggestänge 13 angelenkt sind. In der Fig. 1b sind die Linearmotoren 5 in der Rollenteilung des Förderrollgangs 1 ortsfest angeordnet.

Die Rollgangsabschnitte nach der Fig. 1b können beispielsweise zum Beschleunigen der Walzgutlängen W beim Auslaufen aus der Teilschere nach dem Teilschnitt zum Zweck des Erhaltes einer größeren Stablücke über einen großen Bereich des Förderrollgangs 1 Anwendung finden. Auch ist deren Anwendung direkt vor und hinter der Teilschere möglich, um kurze Hinterschopfenden durch die Messeröffnung beschleunigen und abfördern zu können. Die Rollgangsabschnitte nach der Fig. 1a sind beispielsweise im Bereich des Bremsschieberabschnittes des Auflaufrollganges 31 des Kühlbettes K anwendbar.

In der Fig. 2 ist in den Teilungen der Förderrollen 1a bzw. 31a des Förderrollgangs 1 bzw. des Auflaufrollgangs 31 lediglich unterhalb der Förderebene F ein Linearmotor 5 angeordnet, dem oberhalb der Förderebene F ggf. eine auf die Förderebene F zustellbare, vorzugsweise lamelliert ausgebildete Platte als magnetischer Rückschluß zugeordnet ist. Der Linearmotor 5 ist entsprechend der Fig. 1 im Förderrollgang 1 ortsfest bzw. im Bereich des Auflaufrollganges 31 des Kühlbettes K mittels der gestrichelt dargestellten über an Zuggestänge 13 angelenkte Hubmittel 5a als Bremsschieber heb- und senkbar.

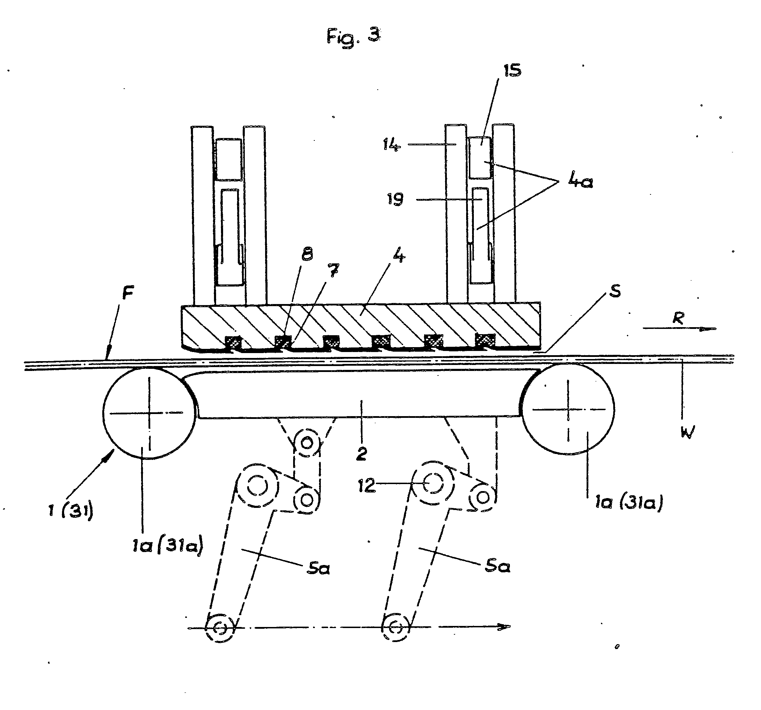

In der Fig. 3 ist im Prinzip eine Variante der Anordnung nach Fig. 1 als weiteres Ausführungsbeispiel dargestellt, bei welcher nur oberhalb der Förderlinie F kammartig ausgebildete Linearmotoren 4 in ihrer technischen Ausbildung baugleich mit den Linearmotoren 4 der Fig. 1 unter Erhalt eines Luftspaltes S gegen die Oberfläche der Walzgutlänge W mittels Verstellmitteln 4a anstellbar sind, während die Plattenführungen 2 in der Rollenteilung der Förderrollen 1a als Rückschlußbleche für den magnetischen Fluß verwendet werden. Die Ständer der Linearmotoren 4, 5 sowie die Rückschlußbleche 2 bestehen vorzugsweise aus lamellierten Blechpaketen. Die Stege 9 der kammartig ausgebildeten Linearmotoren 4, 5 sind vorteilhafterweise mit Polschuhen 10 und/oder mit magnetisch nicht leitenden Führungsschuhen versehen.

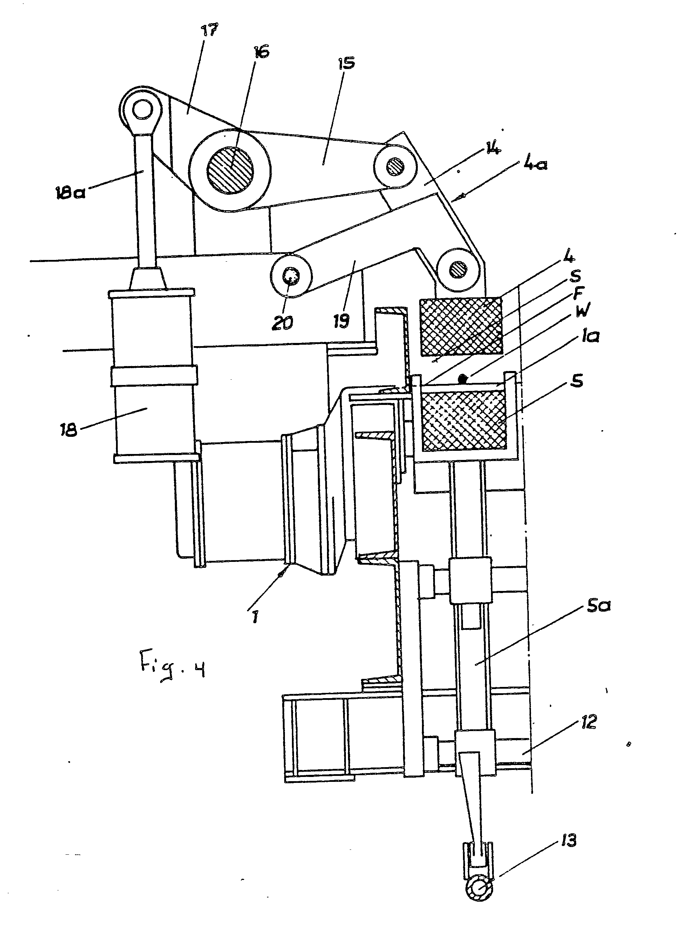

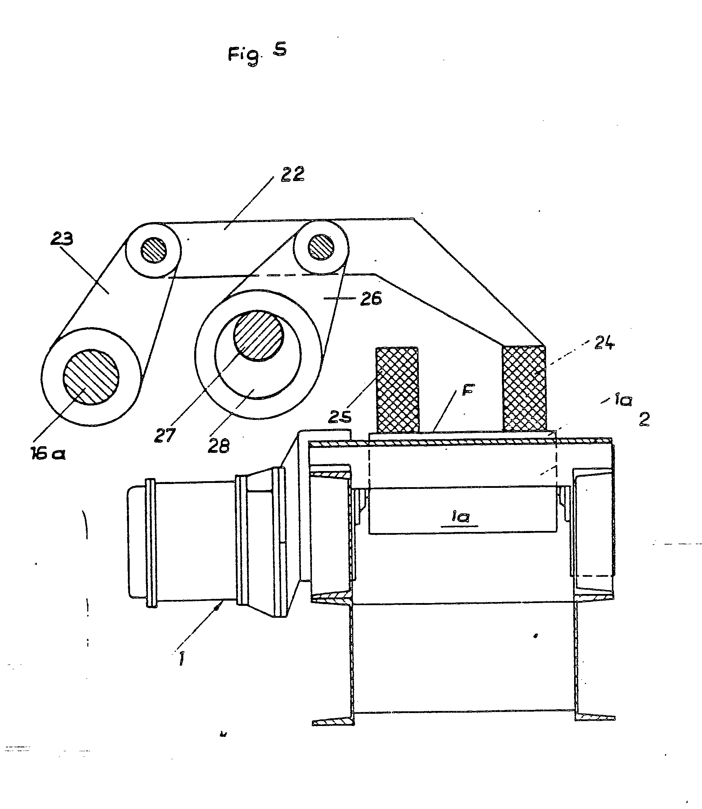

Die Fig. 4 und 5 zeigen die beispielsweise Anordnung der Linearmotoren 4, 5 im Förderrollgang 1 vor und/oder hinter der Teilschere TS im Querschnitt.

In der Fig. 4 sind die oberhalb der Förderebene F angeordneten Linearmotoren beispielsweise mit gabelförmig ausgebildeten Stützlagern 14 versehen, in welchen die mit 4a bezeichneten Verstellmittel einerseits aus Schwenkhebeln 15 gebildet werden, die mit ihrem einen Ende in den Stützlagern 14 beweglich gelagert sind und mit ihrem anderen Ende auf einer Schwenkachse 16 drehfest aufsitzen. Ein weiterer, auf der Schwenkachse 16 drehfest aufsitzender Hebel 17 ist an dem freien Ende einer Kolbenstange 18a eines hydraulischen oder pneumatischen Schwenkantriebes 18 angelenkt. Der Schwenkantrieb 18 bewirkt sowohl die Anstellung der Linearmotoren 4 gegen die Walzgutlänge W unter Einhaltung des Luftspaltes S als auch das Ausschwenken der Linearmotoren 4 aus dem Bereich des Förderrollgangs 1, damit dieser vom Bedienungspersonal zugänglich ist. Andererseits ist, um eine Geradführung bei der Anstellung der Linearmotoren 4 gegen die Linearmotoren 5 bzw. die dazwischen durchlaufenden Walzgutlängen W zu gewährleisten, ein Parallelogrammgestänge 19 mit seinem einen Ende ebenfalls in den gabelförmig ausgebildeten Stützlagern 14 beweglich gelagert und mit seinem anderen Ende um einen ortsfesten Zapfen 20 schwenkbeweglich. Mit 1a sind die Förderrollen bezeichnet. In der Rollenteilung unterhalb der Förderebene F der Walzgutlängen W sind die in den Linearmotoren 4 zugeordneten Linearmotoren 5 ortsfest oder über Schwenkhebel 5a höhenverstellbar angeordnet.

In der Fig. 5 sind die Linearmotoren 24, 25 paarweise in horizontaler Ebene seitlich längs der Förderebene F oberhalb der Plattenführungen 2 zwischen den Förderrollen 1a angeordnet. Die Linearmotoren 24 sind beispielsweise über Verstellhebel 22 an weitere Hebel 23 angelenkt. Die Hebel 23 sitzen auf einer Schwenkachse 16a drehfest auf. Die Verstellbewegung der Hebel 23 erfolgt, wie in der Fig. 4 dargestellt, über weitere Hebel 17, welche ebenfalls einerseits auf der Schwenkwelle 16a drehfest aufsitzen und andererseits mit der Kolbenstange 18a eines hydraulischen oder pneumatischen Schwenkantriebes 18 beweglich verbunden sind. Dadurch ist eine Zustellbewegung der Linearmotoren 24 gegen die Linearmotoren 25 möglich. Damit die Zustellbewegung parallel zur Förderebene F erfolgt, sind an den Verstellhebeln 22 weitere Hebel 26 angelenkt, deren freies Ende in um eine Achse 27 drehbeweglichen Exzentern 28 geführt wird.

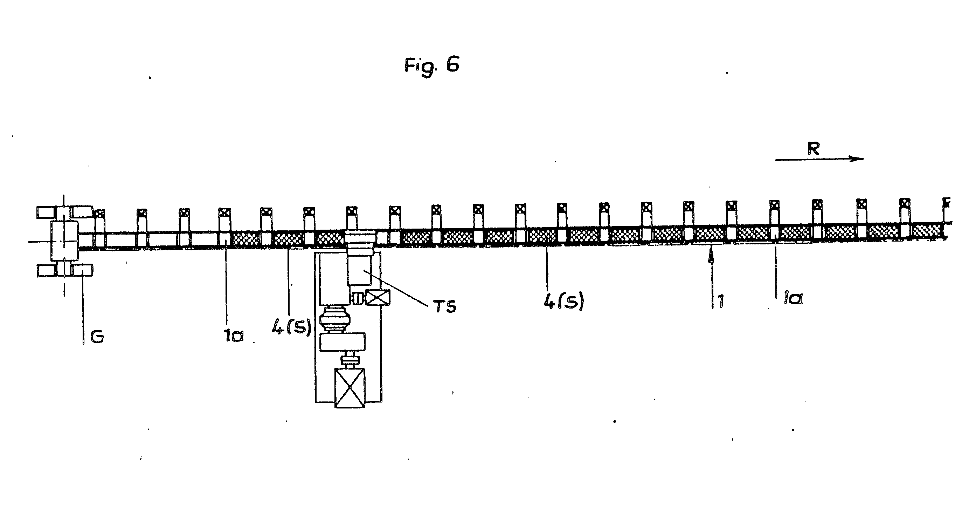

In der Fig. 6 ist der Förderrollgang 1 nach den Fig. 4 bzw. 5 in der Draufsicht dargestellt. Der aus dem letzteren Walzgerüst G einer Walzstraße auslaufende Walzgutstrang läuft durch die Teilschere TS und wird von dieser in Walzgutlängen W (Kühlbettlängen) unterteilt. Der kurz vor und/oder hinter der Teilschere TS befindliche Teil des Förderrollgangs 1 weist. in den Rollenteilungen schematisch dargestellte Linearmotoren 4, 5 in einer der vorbeschriebenen Ausführungsformen auf, um die Teillängen zu beschleunigen, damit die Lücke zwischen den Walzgutlängen W vergrößert wird, um das Trennen der aufeinanderfolgenden Walzgutlängen W voneinander mittels der im Auflaufrollgang 31 vor dem Kühlbett K angeordneten Trennmittel TM zu erleichtern.

Zweckmäßigerweise werden vor der Teilschere TS noch einige Linearmotoren 4, 5 angeordnet, um kürzere Hinterschopfenden, die von den Förderrollen 1a nicht mehr erfaßt werden, derart zu beschleunigen, daß diese sicher durch die geöffneten Scherenmesser durchgefördert und dann eliminiert werden können, so daß Störungen im Betrieb der Teilschere TS ausgeschlossen werden.

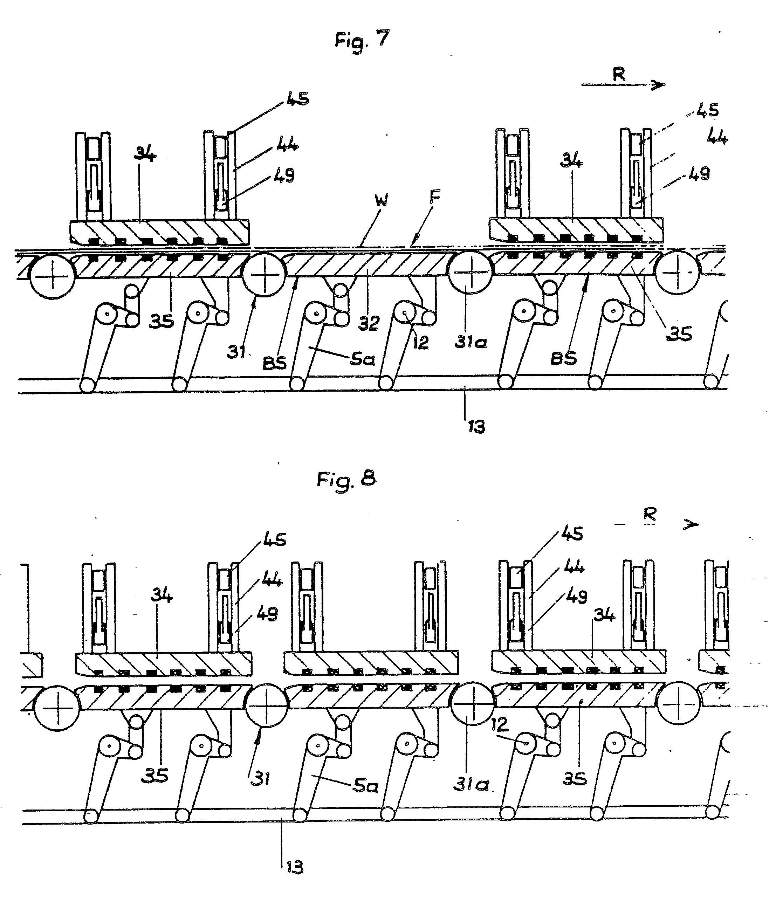

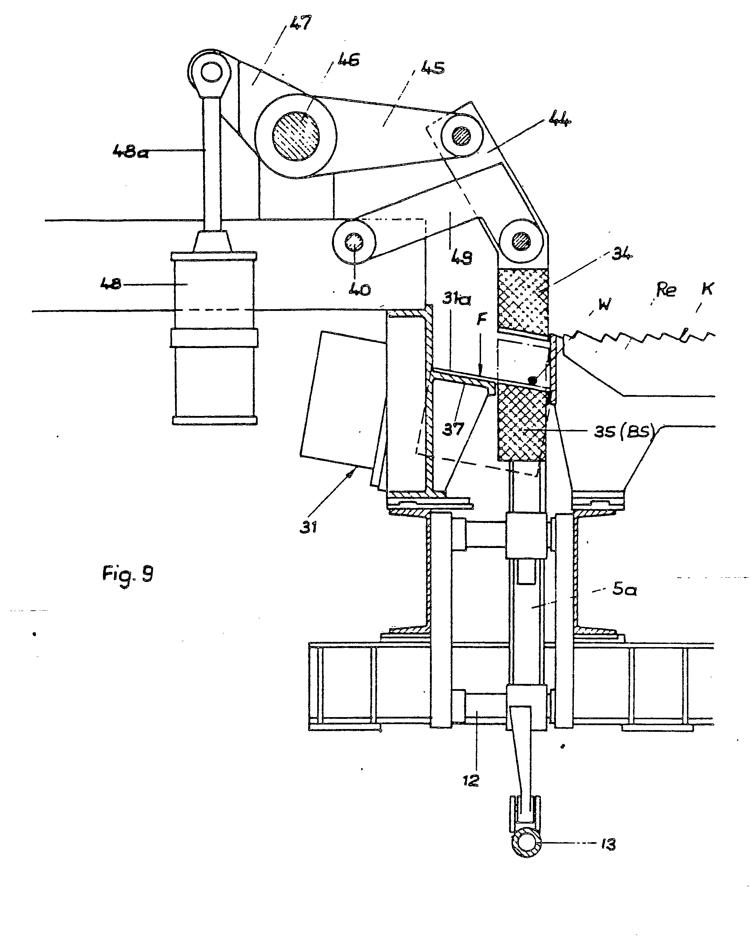

Die Fig. 7 und 8 stellen Ausführungsbeispiele der Anordnung von Linearmotoren 34, 35 im Prinzip im Auflaufrollgang 31 des Kühlbettes K dar, in welchem bereits ein Abbremsen der Walzgutlängen W mittels heb- und senkbarer Bremsschieberabschnitte BS und eine zusätzliche Teilbremsung mittels der Linearmotoren 34, 35 erfolgt. Dabei sind die Bremsschieber BS sowie die unterhalb der Förderebene F angeordneten Linearmotoren 35 über um Achsen 12 bewegliche Winkelhebel 15a in bekannter Weise an ein Zuggestänge 13 angelenkt, welches von einem nicht weiter dargestellten Hubantrieb, bestehend aus beispielsweise umlaufenden Kurvenscheiben und daran anliegenden Rollen, über schwenkbewegliche Hebel zum Senken der Bremsschieber BS und der Linearmotoren 35 betätigbar ist. Eine derartige Anordnung von Bremsschiebern BS und Linearmotoren 34, 35 kann sich nur auf den Abschnitt des Auflaufrollgangs 31 hinter den Trennmitteln TM (Weichen oder Trennschieber) vor dem eigentlichen Kühlbett K erstrecken oder aber auch in den Bereich des Auflaufrollganges 31 neben dem Kühlbett K hineinreichen.

Mit 44 sind gabelförmig ausgebildete Stützlager bezeichnet, welche mit den oberhalb der Förderebene F angeordneten Linearmotoren 34 verbunden sind. In den Stützlagern sind einerseits Schwenkhebel 45 mit ihrem einen Ende und andererseits Parallelogrammgestänge 49 beweglich gelagert.

Unterhalb der Förderlinie F sind nach Fig. 7 teils Linearmotoren 35 bzw. Bremsschieberplatten 32 angeordnet, die gemeinsam den Bremsschieberabschnitt BS bilden und über um Achsen 12 bewegliche Winkelhebel 5a und an diese angelenkte Zuggestänge 13 über die Förderebene F unter Abbremsen der Walzgutlängen W von einem nicht weiter dargestellten Hubantrieb anhebbar sind, um die aufeinanderfolgenden Walzgutlängen W anschließend auf das daneben angeordnete Kühlbett K bzw. durch Anheben mittels der beweglichen Rechen des Kühlbettes K die Walzgutlängen W von dem Bremsschieberabschnitt BS auf das Kühlbett K überzufördern. Mittels der Bremsschieberplatten 32 werden die Walzgutlängen W infolge mechanischer Reibung abgebremst, während mittels der Hubbewegung der Bremsschieberplatten 32 folgende Linearmotoren 34, 35 eine zusätzliche Bremswirkung berührungslos infolge der vorbeschriebenen, in den Walzgutlängen W erzeugten, der Förderrichtung R entgegengerichteten Kraftwirkung ausgeübt wird. Die Folge davon ist, daß der Bremsweg und damit der Kühlbettakt verkürzt werden kann bzw. die kleinsten Walzgutquerschnitte mit höheren Geschwindigkeiten auf den Auflaufrollgang 31 neben dem Kühlbett K auflaufen können, ohne die Länge des Kühlbettes K vergrößern zu müssen.

In der Fig. 8 sind alternativ zu Fig. 7 in dem Auflaufrollgang 31 des Kühlbettes K ausschließlich paarweise Linearmotoren 34, 35 angeordnet, die im Bereich des Bremsschieberabschnittes BS abgesehen von einer möglichen Teilbremsung durch Reibung den überwiegenden Anteil der Bremskraft in der Walzgutlänge W während des Anhebens der Linearmotoren 34, 35 durch die in dieser erzeugten, der Förderrichtung R entgegengerichteten Kraftwirkung, bewirken.

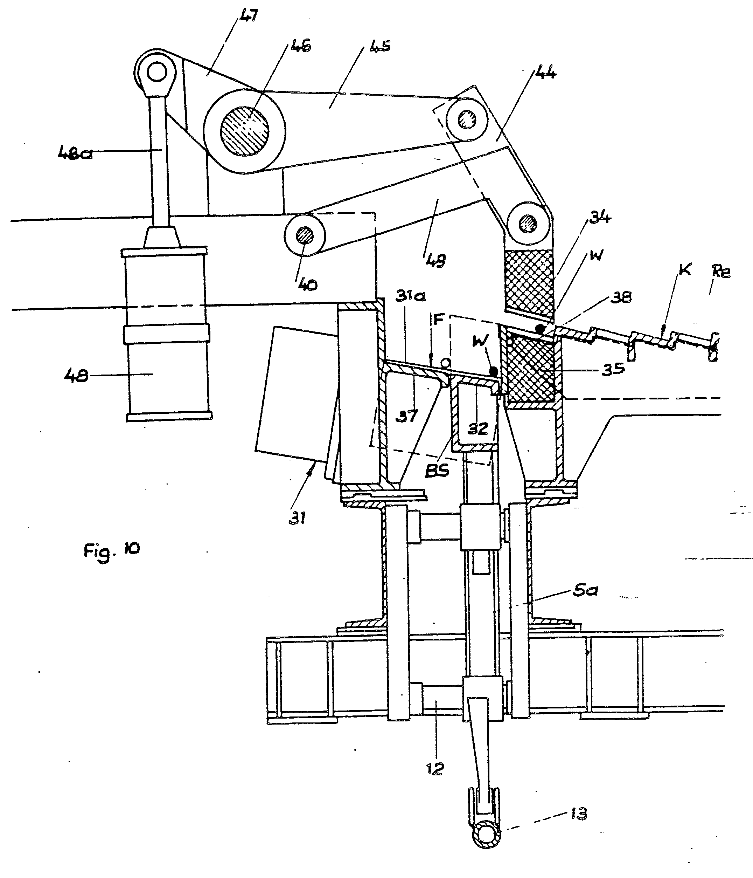

In den Fig. 9 bis 13 sind alternative Ausführungsformen der in den Fig. 7 und 8 in der Seitenansicht dargestellten beispielsweisen Ausbildungen des Auflaufrollgangs 31 und/oder neben dem Kühlbett K in der Seitenansicht im Querschnitt dargestellt.

In der Fig. 9 ist mit 31 der Auflaufrollgang mit in der Längsachse zum Kühlbett K hin geneigt angeordneten Förderrollen 31a bezeichnet. Die Förderrollen 31a bilden mit ihren Oberkanten die Förderebene F und erstrecken sich über die Breite des Förderrollgangs 31, der aus einem linken Längsabschnitt mit festen Bodenplatten 37 und einem rechten Längsabschnitt, dem sogenannten Bremsschieberabschnitt BS mit heb- und senkbaren Bremsschieberplatten 32 bzw. mit diesen bildenden Linearmotoren 35 besteht. Seitlich an den Bremsschieberabschnitt BS schließt sich das Kühlbett K zum Querfördern unter Abkühlen der abgebremsten Walzgutlängen W an. Oberhalb des ggf. teils aus Bremsschieberplatten 32 und teils aus Linearmotoren 35 gebildeten Bremsschieberabschnittes BS sind den Linearmotoren 35 zur Förderebene F zustellbare Linearmotoren 34 angeordnet, die mit gabelförmig ausgebildeten Stützlagern 44 versehen sind. In den Stützlagern 44 sind einerseits mit ihren freien Enden Schwenkhebel 45 und andererseits Parallelogrammgestänge 49 mit ihren freien Enden beweglich gelagert. Die Schwenkhebel 45 sitzen andererseits auf einer Schwenkwelle 46 drehfest auf, während die Parallelogrammgestänge 49 zur Geradführung anderenends um ortsfeste Zapfen 40 schwenkbeweglich sind. Die Schwenkwelle 46 ist über eine Kolbenstange 48a eines in einem Verstellzylinder 48 geführten, beiderseitig beaufschlagbaren Kolbens drehbeweglich, indem an die Kolbenstange 48a ein Hebel 47 angelenkt ist, der mit seinem anderen Ende drehfest auf der Schwenkwelle 46 aufsitzt. Der Verstellzylinder 48 hat einerseits die Aufgabe, die Linearmotoren 34 unter Einhaltung eines Luftspaltes S gegenüber der Oberfläche der Walzgutlänge W zuzustellen und anschließend der Hubbewegung der im Bremsschieberabschnitt BS angeordneten Linearmotoren 35 bis in die Übergabeposition der Walzgutlänge W unter Abbremsen bis zum Stillstand zu folgen und andererseits ein Ausschwenken der Linearmotoren 34 zwecks Zugänglichkeit des Auflaufrollgangs 31, beispielsweise bei Störungen, zu gewährleisten. Das Abfördern der Walzgutlängen W auf das Kühlbett K kann entweder durch Überlaufen oder durch Ausheben mittels der beweglichen Rechen des Kühlbettes R aus dem Bremsschieberabschnitt BS erfolgen.

In der Fig. 10 ist als weiteres Ausführungsbeispiel die Anordnung der Linearmotoren 34, 35 im Bereich längs des Richtplattenrostes 38 des Kühlbettes K dargestellt. Der Verstellantrieb der oberhalb des Richtplattenrostes 38 befindlichen Linearmotoren 34 entspricht der in der Fig. 9 dargestellten Ausbildung. Der Auflaufrollgang 31 mit den mit ihren Längsachsen zum Kühlbett K hin geneigt angeordneten Förderrollen 31a besteht ebenfalls aus einem linken Längsabschnitt mit festen Bodenplatten 37 und einem rechts daneben angeordneten, dem Kühlbett K zugewandten Bremsschieberabschnitt BS mit heb- und senkbaren Bremsschieberplatten 32. Die Bremsschieberplatten 32 sind, wie vorbeschrieben, durch Zuggestänge 13 über um Festlager 12 bewegliche Winkelhebel 5a heb- und senkbar und heben die Walzgutlängen W unter Teilbremsen von der Förderebene F in die gestrichelt dargestellte Lage an, wobei diese auf den Richtplattenrost 38 überlaufen und mittels der im Längsabschnitt des Richtplattenrostes 38 angeordneten, einander zugeordneten Linearmotoren 34, 35 unter der auf die Walzgutlängen W ausgeübten Kraftwirkung bis zum Stillstand abgebremst werden. Bevor die beweglichen Rechen des Kühlbettes K die nacheinander zugeführten Walzgutlängen W aus dem Richtplattenrost 38 ausheben, werden die oberen Linearmotoren 34 mittels des Schwenkantriebes 48 ausgeschwenkt.

Die in den Nuten der Linearmotoren 34, 35 geführten Ständerwicklungen können auch statt rechtwinklig zur Förderrichtung R ausgebildet, schräg verlaufend ausgeführt werden, wodurch der auf die Walzgutlängen W ausgeübten bremsenden elektromagnetischen Kraftwirkung noch eine die Walzgutlängen W seitlich ausgelenkte bzw. querfördernde elektromagnetische Kraftkomponente überlagert wird.

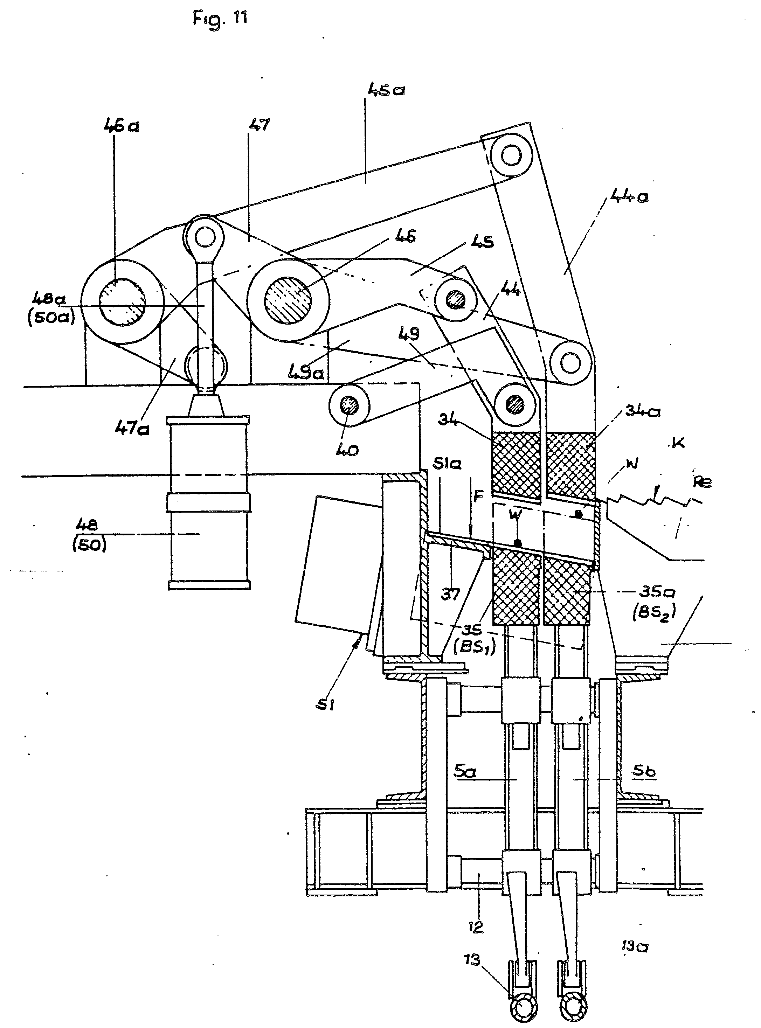

Die Fig. 11 stellt ein weiteres Ausführungsbeispiel der Anordnung von Linearmotoren mit zwei oder mehr nebeneinanderliegenden Bremsschieberabschnitten im Bereich des Auflaufrollgangs vor und/oder neben dem Kühlbett K dar.

Mit 51 ist der Auflaufrollgang vor und neben dem Kühlbett K bezeichnet, der ebenfalls mit ihren Längsachsen geneigt zum Kühlbett K hin angeordnete Förderrollen 51a aufweist. Im Bereich des Auflaufrollgangs 51 ist links ein Längsabschnitt mit festen Bodenplatten 37 unterhalb der Förderebene F angeordnet. Rechts daneben sind zum Kühlbett K hin zwei nebeneinander sich erstreckende heb- und senkbare Bremsschieberabschnitte BS₁ und BS₂ angeordnet, welche mit Linearmotoren 35 bzw. 35a versehen sind. Der Bremsschieberabschnitt BS₁ ist über um Achsen 12 schwenkbewegliche Winkelhebel 5a mittels Zuggestängen 13, und der Bremsschieberabschnitt BS₂ ist über um Achsen 12 schwenkbewegliche Winkelhebel 5b mittels Zuggestängen 13a unabhängig von dem Bremsschieberabschnitt BS₁ zur Förderebene F heb- und senkbar.

Den Linearmotoren 35 des Bremsschieberabschnittes BS₁ sind oberhalb der Förderebene F auf diese zustellbare und mit dem Anheben der Linearmotoren 35, deren Hubbewegung folgend, Linearmotoren 34 angeordnet, die in vorbeschriebener Weise mittels des Verstellantriebes 48 beweglich bzw. ausschwenkbar sind. Während der Hubbewegung der Linearmotoren 34, 35 des Bremsschieberabschnittes BS₁ erfolgt eine Teilbremsung der Walzgutlängen W, die nach dem Überlaufen der Walzgutlängen W auf den Bremsschieberabschnitt BS₂ während der Hubbewegung durch die Linearmotoren 34a, 35a bis zum Stillstand der Walzgutlängen W bei Erreichen der oberen Hubposition fortgesetzt wird, bis das Überfördern auf das Kühlbett K oder das Ausheben der Walzgutlängen W aus dem Bremsschieberabschnitten BS₂ mittels der beweglichen Rechen auf das Kühlbett K erfolgt. Der Hubantrieb der Linearmotoren 34 entspricht der in der Fig. 9 beispielsweise dargestellten Ausführung. Die Linearmotoren 34a sind entsprechend den Linearmotoren 34 mit gabelförmig ausgebildeten Stützlagern 44a versehen, in denen Parallelogrammgestänge 49a sowie Schwenkhebel 45a mit ihrem einen Ende drehbeweglich gelagert sind. Die Schwenkhebel 45a sind anderenends mit einer Schwenkwelle 46a drehfest verbunden, während die Parallelogrammgestänge 49a anderenends auf der Schwenkwelle 46 drehbeweglich gelagert sind. Auf der Schwenkwelle 46a sitzt ebenfalls mit seinem einen Ende ein Hebel 47a drehfest auf, der anderenends an das freie Ende einer in dem beiderseitig beaufschlagbaren Verstellzylinder 50 geführten Kolbenstange 50 angelenkt ist. Die Verstellzylinder 48, 50 dienen gleichzeitig zum Ausschwenken der Linearmotoren 34, 34a, um eine Zugänglichkeit zu dem Auflaufrollgang 51 zu gewährleisten.

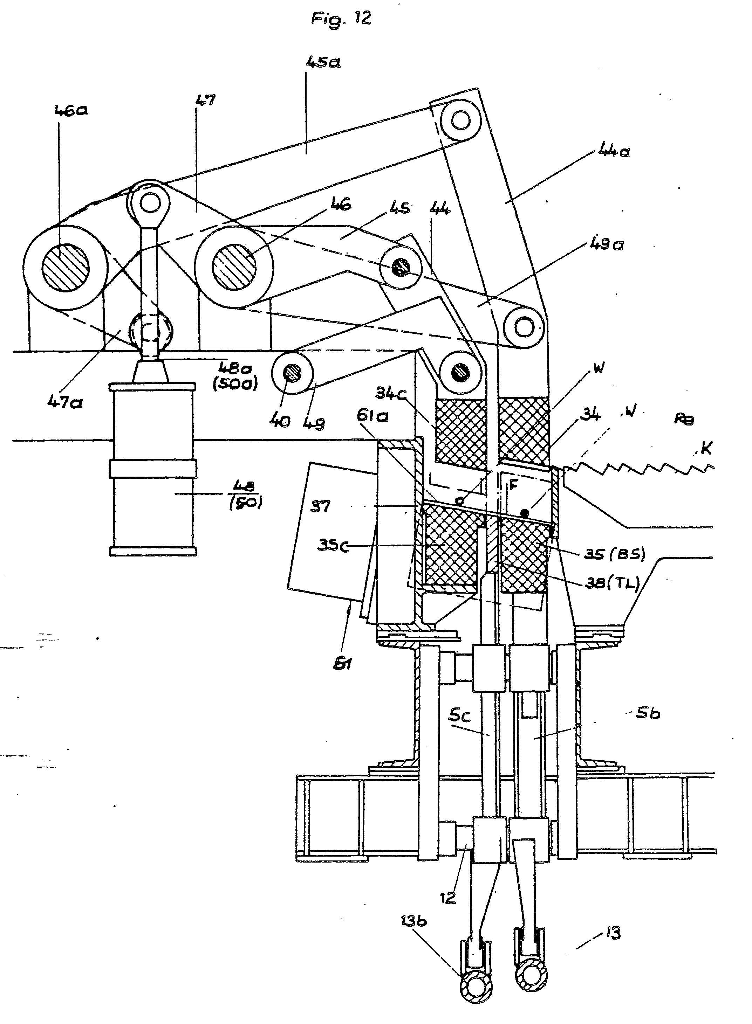

In der Fig. 12 sind als weiteres Ausführungsbeispiel paarweise zueinander angeordnete Linearmotoren längs des Bremsschieberabschnittes in vertikaler Ebene einander gegenüberstehend vor und/oder im Bereich neben dem Kühlbett im Querschnitt im Prinzip dargestellt.

Mit 61 ist der Auflaufrollgang mit in der Längsachse zum Kühlbett K hin geneigt angeordneten Förderrollen 61a bezeichnet. Die Förderrollen 61a bilden mit ihrer Oberkante die Förderebene F und erstrecken sich über die Breite des Förderrollgangs 61. Dieser wird aus einem linken Längsabschnitt 37 gebildet, dessen feste Bodenplatten aus ortsfesten Linearmotoren 35c in den Rollenteilungen bestehen, deren Oberkante etwas unterhalb der Förderebene F liegt. Den Linearmotoren 35c sind paarweise oberhalb der Förderebene F im Längsabschnitt 37 heb- und senkbare Linearmotoren 34c zugeordnet. Neben dem Längsabschnitt 37 erstreckt sich im Bereich der Rollenteilungen ein Längsabschnitt TL, bestehend aus heb- und senkbaren Trennleisten 38, welche über um Achsen 12 schwenkbewegliche Winkelhebel 5c mit einem Zuggestänge 13b gelenkig verbunden sind. Die Trennleisten 38 des Längsabschnitts TL haben die Aufgabe, die im Längsabschnitt 37 nacheinander auflaufenden Walzgutlängen W zunächst in der gestrichelt dargestellten angehobenen Lage der Trennleisten 38 zu führen und nach Absenken der Trennleisten 38 ein Überlaufen der Walzgutlängen W auf den dem Kühlbett K zugeordneten Bremsschieberabschnitt BS zu ermöglichen. In dem Bremsschieberabschnitt BS sind teilweise oder ausschließlich Linearmotoren 35 unterhalb der Förderebene F angeordnet, welche über um Achsen 12 schwenkbewegliche Winkelhebel 5b an ein Zuggestänge 13 angelenkt sind, wodurch der Bremsschieberabschnitt BS mit den als Linearmotoren 35 ausgebildeten Bremsschieberplatten heb- und senkbar ist. Durch Anheben des Bremsschieberabschnittes BS in seine obere Lage wird jede Walzgutlänge W bis zum Stillstand abgebremst, indem einerseits durch den mechanischen Reibungswiderstand auf der Gleitfläche der Linearmotoren 35 und andererseits durch deren bremsende Kraftwirkung zwischen den einander gegenüberstehenden Linearmotoren 35 und 34 die Walzgutlängen W bis zum Stillstand abgebremst und anschließend auf das rechts daneben angeordnete Kühlbett K übergeleitet werden. Die Linearmotoren 34 sind ebenfalls heb- und senkbar ausgebildet, um auch beim Anheben der Linearmotoren 35 des Bremsschieberabschnittes BS mit diesen unter Erhalt eines geringen Luftspaltes S gegenüber der Oberfläche der Walzgutlänge W in gleichem Maß mit angehoben werden zu können. Andererseits sollen die Linearmotoren 34 ebenso wie die Linearmotoren 34c ausschwenkbar sein, um beispielsweise bei Störungen die Zugänglichkeit zu dem Auflaufrollgang 61 bzw. dessen Längsabschnitten zu gewährleisten. Die Einrichtung zum Heben und Senken der Linearmotoren 34, 34c entspricht der in der Fig. 11 für die Linearmotoren 34, 34a als Ausführungsbeispiel beschriebenen und dargestellten Ausbildung.

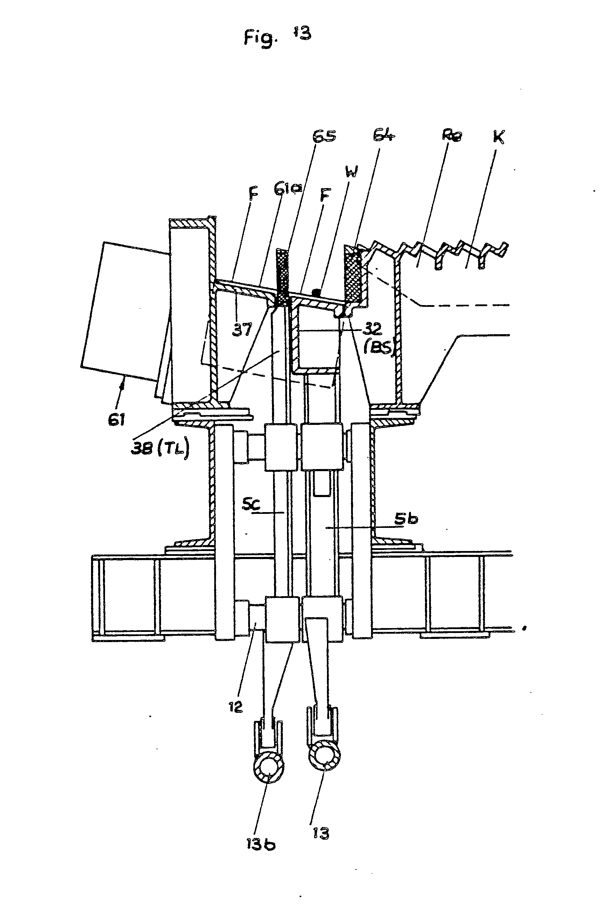

In der Fig. 13 ist ein weiteres Ausführungsbeispiel für die Anordnung der Linearmotoren im Bereich längs des Bremsschieberabschnittes BS dargestellt. Dabei sind die Linearmotoren 64, 65 beiderseits des aus Bremsschieberplatten 32 bestehenden heb- und senkbaren Bremsschieberabschnittes BS in horizontaler Ebene einander gegenüberstehend angeordnet. Während die Linearmotoren 64 ortsfest an der dem Kühlbett K mit beispielsweise festen und beweglichen Rechen R zugewandten Längsseite befestigt sind, bilden die Linearmotoren 65 das Kopfstück der Trennleisten 38 des heb- und senkbaren Trennleistenabschnittes TL. Links neben dem Trennleistenabschnitt TL ist der Längsabschnitt mit festen Bodenplatten 37 angeordnet. Der Auflaufrollgang 61 vor und im Bereich des Kühlbettes K ist mit die Förderebene F der Walzgutlänge W mit ihrer Oberkante bildenden, mit ihren Längsachsen zum Kühlbett hin geneigten Förderrollen 61a versehen, welche die Längsabschnitte 37, TL und BS durchsetzen. Die Trennleisten 38 gemeinsam mit den Linearmotoren 65 sind, wie vorbeschrieben, zum Überlaufen der im Längsabschnitt 37 zugeförderten Walzgutlängen W in den Bereich der Bremsschieber 32 an um Achsen 12 bewegliche Winkelhebel 5c angelenkt, welche über Zuggestänge 13b heb- und senkbar sind. Die Bremsschieber 32 sind ebenfalls mit um Achsen 12 schwenkbeweglichen Winkelhebeln 5b verbunden, welche an Zuggestänge 13 angelenkt sind.

Das Abbremsen der Walzgutlängen W erfolgt teils durch Anheben der Bremsschieberplatten 32 und der damit auf die Walzgutlänge W wirksam werdenden mechanischen Reibungskräfte sowie durch die zusätzliche von den Linearmotoren 64, 65 auf die Walzgutlängen zur Einwirkung kommenden elektromagnetischen Bremskräfte.

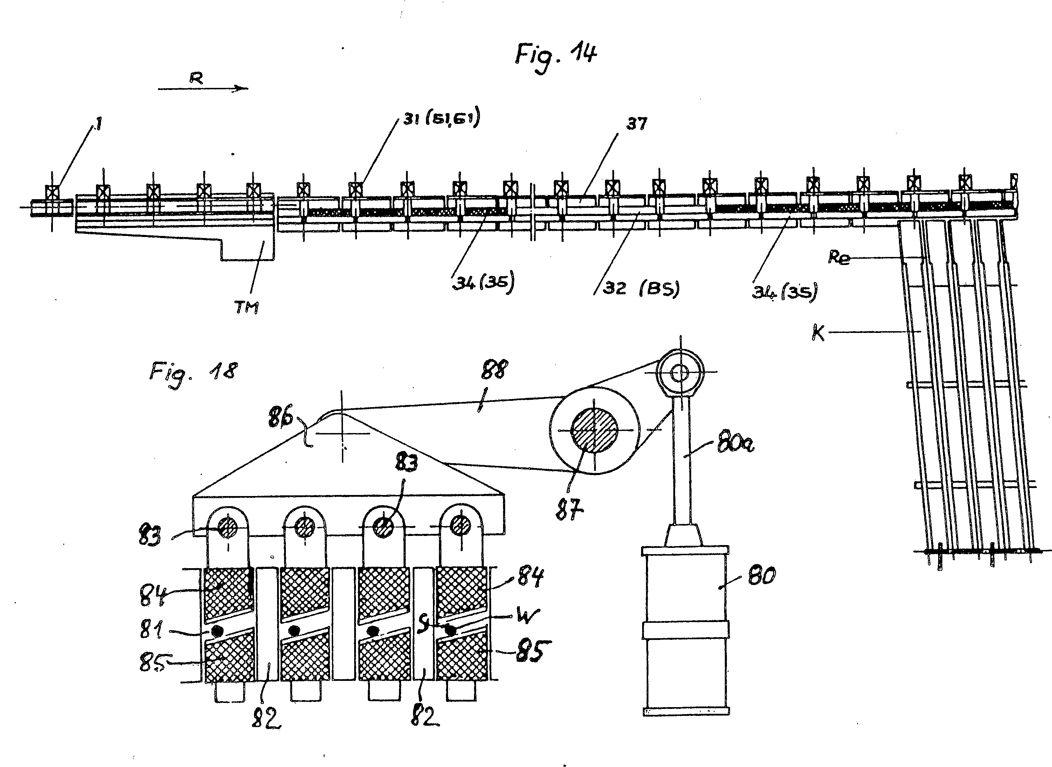

In der Fig. 14 ist eine Draufsicht der grundsätzlichen Anordnung des Auflaufrollgangs 31, 51, 61 zwischen einer als Trennmittel TM ausgebildeten Weiche und dem Kühlbett K im Prinzip dargestellt.

An den Förderrollgang 1 schließt sich in der Förderrichtung R zum Überleiten der Walzgutlängen W auf den Längsabschnitt mit festen Bodenplatten 37 bzw. den Bremsschieberabschnitten BS mit heb- und senkbaren Bremsschieberplatten 32 eine schwenkbewegliche Weiche als Trennmittel TM an. Die Walzgutlängen W werden zunächst im Längsabschnitt 37 bis in den Bereich des Kühlbettes K gefördert, laufen dann so rechtzeitig auf den Bremsschieberabschnitt BS über und werden durch Anheben der Bremsschieberplatten 32 im Zusammenhang mit den vorbeschriebenen in den Fig. 9 bis 13 im Querschnitt dargestellten Anordnungen von Linearmotoren abgebremst und aus dem Bremsschieberabschnitt BS mittels der beweglichen Rechen Re auf das Kühlbett K ausgehoben bzw. gleiten von dem Bremsschieberabschnitt BS auf die erste Rast der festen Rechen des Kühlbettes K über.

Der Auflaufrollgang im Bereich vor und neben dem Kühlbett kann, wie in den Fig. 12, 13 dargestellt, zwischen dem Längsabschnitt mit festen Bodenplatten 37 und dem Bremsschieberabschnitt BS alternativ auch noch einen Trennleistenabschnitt TL aufweisen. Auch können, wie in Fig. 11 dargestellt, mehrere Bremsschieberabschnitte BS$_1$, BS$_2$ nebeneinander angeordnet werden.

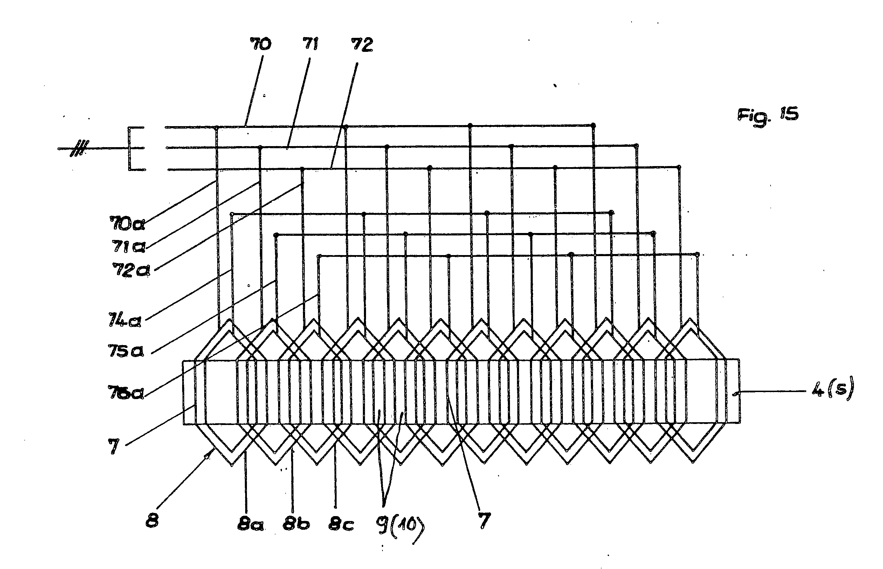

Die Fig. 15 zeigt die Beschaltung der Ständerwicklungen 8 eines Linearmotors schematisch. Mit 5 ist beispielsweise der Ständer eines Linearmotores bezeichnet, in dessen Nuten 7 Ständerwicklungen 8a, 8b, 8c eingelegt sind. Die Spulen der Ständerwicklung 8a, 8b, 8c sind über Zuleitungen 70a, 71a, 72a mit den Drehstrom-Zuleitungen 70, 71, 72 verbunden und über Ableitungen 74a, 75a, 76a in den drei Phasen gruppenweise miteinander parallelgeschaltet, wodurch die elektromagnetische Kraftwirkung des erzeugten Wanderfeldes auf die Walzgutlänge W im Sinne eines Beschleunigens oder Abbremsens induziert wird.

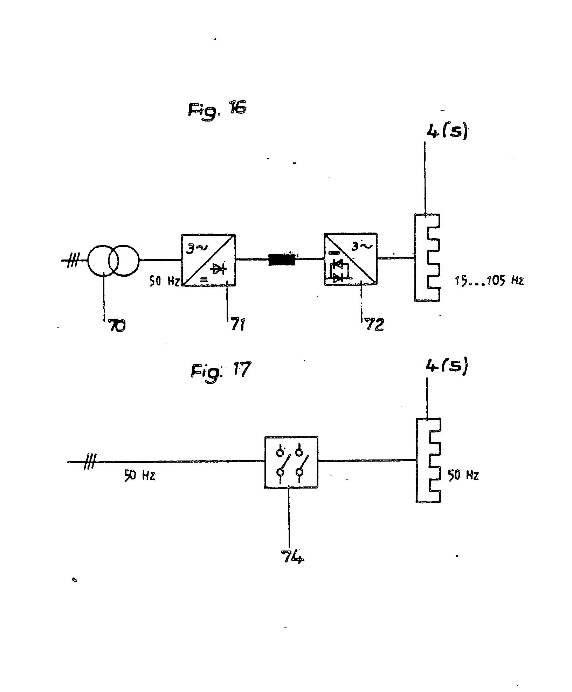

In der Fig. 16 ist die Beschaltung der Linearmotoren im Prinzip dargestellt. Der Drehstrom wird über einen Transformator 70 dreiphasig einem Gleichrichter 71 zugeführt. Die Gleichspannung wird in einem Wechselrichter 72 in eine Wechselspannung mit veränderbarer Frequenz von ca. 15 bis 105 Hz umgewandelt, welche dreiphasig an den Statorwicklungen 8a, 8b, 8c des Linearmotors anliegt. Damit kann das elektromagnetische Wanderfeld abhängig von der Walzgutgeschwindigkeit verändert werden.

Die Fig. 17 zeigt schematisch die Anordnung einer Reversier-Schütz-Steuerung 74 im Schaltkreis der Linearmotoren, um ein Umsteuern des die Statorwicklungen 8a, 8b, 8c durchfließenden Stromes hinsichtlich der Richtung vornehmen zu können, und damit eine der Förderrichtung R der Walzgutlängen W entgegengerichtete bremsende oder eine in der Förderrichtung F gerichtete, beschleunigende elektromagnetische Kraftwirkung in den Walzgutlängen W zu induzieren.

Wie beispielsweise in der Fig. 2 schematisch dargestellt, können die Förder- und Auflaufrollgänge 1 bzw. 31 vor und/oder im Bereich des Kühlbettes K anstelle von Antriebsmotoren auch von den Linearmotoren 5 angetrieben werden, indem in den dem Rollenumfang zugewandten Stirnseiten der Linearmotoren 5 zusätzliche Ständerwicklungen 11 in Nuten 7a angeordnet und die Stirnseiten der Linearmotoren der Krümmung der Umfangsflächen der Rollgangsrollen entsprechend ausgebildet sind. Dadurch wird das für die Förderbewegung der Walzgutlängen W aufzubringende Drehmoment der Rollgangsrollen mit von den Linearmotoren erzeugt und damit der Kostenaufwand für die Rollgänge erheblich verringert.

In der weiteren Ausbildung der Erfindung ist es auch möglich, die für den Förderrollgang dargestellte und beschriebene Anordnung der Linearmotoren sinngemäß in dem Bereich der Adjustageanlage vor und hinter der Teilschere zum Unterteilen der Walzgutlängen W (Kühlbettlängen) in Handelslängen bzw. im Bereich der Richtmaschinen vor und/oder hinter diesen anzuwenden.

Schließlich kann ggf. auf die Rollgangsrollen verzichtet werden, indem die Linearmotor-Anordnung auch die Förderbewegung der Walzgutlängen W in der Förderlinie F vor das Kühlbett K mit übernehmen.

Die Linearmotoren können sinngemäß auch als Generatoren wirkend umsteuerbar ausgebildet werden, um die Wärmeentwicklung in den Walzgutlängen W durch das Abbremsen mittels des elektromagnetischen Wanderfeldes zu senken. Dazu wird die Frequenz des elektromagnetischen Wanderfeldes der Linearmotoren soweit gesenkt, daß die Walzgutgeschwindigkeit im übersynchronen Bereich der Linearmotoren liegt.

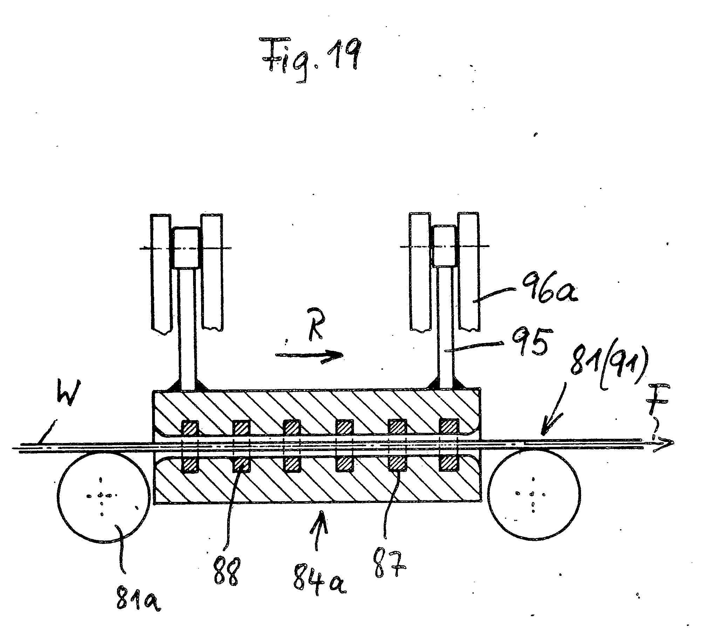

In der Fig. 18 ist eine aus mehreren nebeneinanderliegenden, in sich allseitig geschlossenen Auflaufrinnen bestehende Einrichtung zum Abbremsen oder Vorbremsen von Walzgutlängen W mittels Paaren von Linearmotoren beispielsweise vor oder im Bereich von Hochgeschwindigkeits-Kühlbetten im Prinzip im Querschnitt dargestellt.

Mit 81 sind beispielsweise mehrere nebeneinander angeordnete, allseitig geschlossene Auflaufrinnen für Walzgutlängen W bezeichnet. Beiderseitig werden die Auflaufrinnen 81 durch senkrecht verlaufende Führungswände 82 begrenzt, zwischen denen Paare von Linearmotoren 84, 85 angeordnet bzw. geführt sind. Während beispielsweise die unteren Linearmotoren 85 ortsfest angeordnet sind, sind die oberen Linearmotoren 84 gelenkig an Zapfen 83 einer Traverse 86 aufgehängt. Die Traverse 86 ist mittels einer in einem hydraulischen oder pneumatischen Hubzylinder 80 geführten Kolbenstange 80a, welche mit ihrem freien Ende an um eine Achse 87 schwenkbewegliche Winkelhebel 88 angelenkt ist, heb- und senkbar bzw. nach oben ausschwenkbar ausgebildet. Dadurch können einerseits die Linearmotoren 84a zum Abbremsen der Walzgutlängen W unter Erhalt eines Luftspaltes S den zugeordneten Linearmotoren 85 genähert werden. Andererseits sind die Auflaufrinnen 81 durch Ausschwenken der Traverse 81 beispielsweise bei Störungen zugänglich. Den Auflaufrinnen 81 sind vorzugsweise nach unten öffenbare Klapprinnen oder dergleichen im Bereich des Kühlbettes nachgeordnet, von wo aus die Walzgutlängen W in die Rasten des Kühlbetts gelangen. Eine bauliche Abwandlung der im Prinzip dargestellten Ausführungsbeispiele ist möglich.

In den Fig. 19 bis 23 sind Ausführungsbeispiele der Erfindung dargestellt.

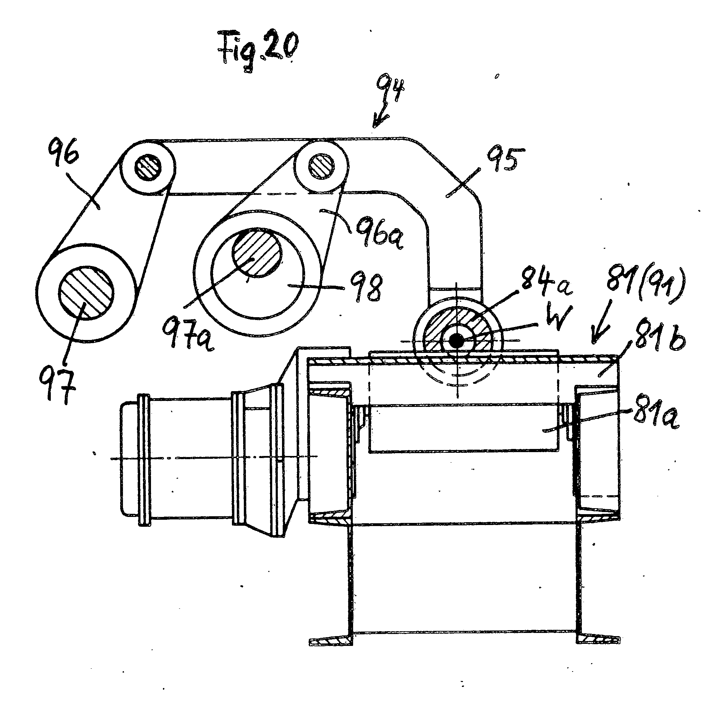

Die Fig. 19 und 20 zeigen einen Abschnitt eines Auflaufrollgangs 81 bzw. einer Auflaufrinne 91, in welchen Linearmotoren 84a mit ringförmigem Querschnitt in der Rollenteilung von Förderrollen 81a angeordnet sind. Die Linearmotoren 84a sind derart angebracht, daß die Förderlinie F der Walzgutlängen W durch den inneren Ringquerschnitt der Linearmotoren 84a hindurchgeführt. Dadurch bildet der Innenumfang des Ringquerschnittes der Linearmotoren 84a zugleich die Führung der Walzgutlängen W im Bereich der Linearmotoren 84a.

Die ringförmigen Linearmotoren 84a sind in bekannter Weise mit Ringnuten 87 versehen, in welchen dreiphasig an eine Drehstromversorgung angeschlossene Ständerwicklungen 88 liegen. Die Linearmotoren 84a erzeugen in ihren Ständerwicklungen 88 in bekannter Weise ein elektromagnetisches Wanderfeld, welches auf die Walzgutlänge W je nach Schaltung der Ständerwicklungen 88 eine in der Förderrichtung R oder dieser entgegengesetzte Kraftwirkung ausübt, welche auf die Walzgutlänge W bezüglich ihrer Förderbewegung beschleunigend oder abbremsend wirksam wird. Durch den ringförmigen Querschnitt des Linearmotors 84a wird ein konzentrisch wirksames Wanderfeld mit einer größeren Kraftwirkung gegenüber der von flachen Linearmotoren auf das Walzgut ausgeübt, wodurch ein effektives berührungsloses Beschleunigen und/oder Abbremsen der Walzgutlängen W möglich ist.

Um einen konventionellen Betrieb zu ermöglichen und zur besseren Zugänglichkeit des Auflaufrollgangs 81 bzw. der Auflaufrinne 91 sind die ringförmigen Linearmotoren 84a aus der Förderlinie F ausbringbar. Das kann beispielsweise mit einer Verschiebe- oder Schwenkvorrichtung 94 erfolgen. In den Fig. 19 und 20 ist eine derartige Verschiebe- oder Schwenkvorrichtung 94 schematisch dargestellt.

Mit 95 ist ein Gestänge bezeichnet, welches an seinem einen Ende mit den Linearmotoren 84a verbunden ist, und anderenends an einen Schwenkhebel 96 angelenkt ist, der auf einer Welle 97 drehfest aufsitzt. Die Welle 97 ist über einen nicht weiter dargestellten Antrieb drehbeweglich. An das Gestänge 95 ist ein weiterer Hebel 96a mit seinem einen Ende angelenkt, welcher über eine Welle 97a mit Exzenter 98 eine Hubbewegung auf das Gestänge 95 ausübt und dadurch den Linearmotor 84a seitlich zur Förderlinie ausschwenkte, so daß ein konventioneller Förderbetrieb mit dem Förderrollgang 81 durch Schließen der entstandenen Lücken in der Rollenteilung durch Einsetzen von Plattenführungen 81b od. dergl. Führungsabschnitte möglich bzw. der Förderrollgang 81 besser zugänglich ist.

Sofern die Linearmotoren 84a ausgeschwenkt sind, kann das Fördern und Beschleunigen der Walzgutlängen W mittels der angetriebenen Förderrollen 81a erfolgen, während das Abbremsen der Walzgutlängen W mittels nicht weiter dargestellter Bremsschieberabschnitte in dem Auflaufrollgang 81 durchgeführt wird.

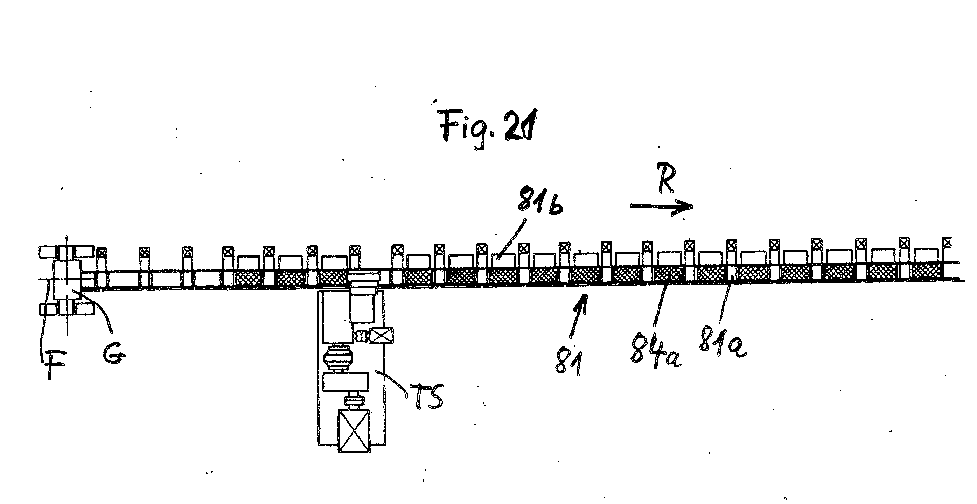

In der Fig. 21 ist ein Auflaufrollgang 81 im Anschluß an das letzte Walzgerüst G einer Walzstraße bezeichnet, in welchen eine Teilschere TS zum Unterteilen des Walzgutstranges in Walzgutlängen W eingebaut ist. In dem Auflaufrollgang 81 sind, wie vorbeschrieben in den Teilungen der Förderrollen 81a ringförmige Linearmotoren 84a angeordnet, die seitlich aus der Förderlinie F ausbringbar sind. Mit dem Ausbringen der Linearmotoren 84a werden zum Schließen der Lücken in der Rollenteilung Plattenführungen 81b oder dergleichen Führungsabschnitte gleichzeitig in diese eingeschoben. Damit kann der Auflaufrollgang 81 abhängig von dem Walzgutquerschnitt und/oder der Walzgutgeschwindigkeit entweder als konventioneller Auflaufrollgang oder als Auflaufrollgang mit eingeschalteten ringförmigen Linearmotoren 84a betrieben werden.

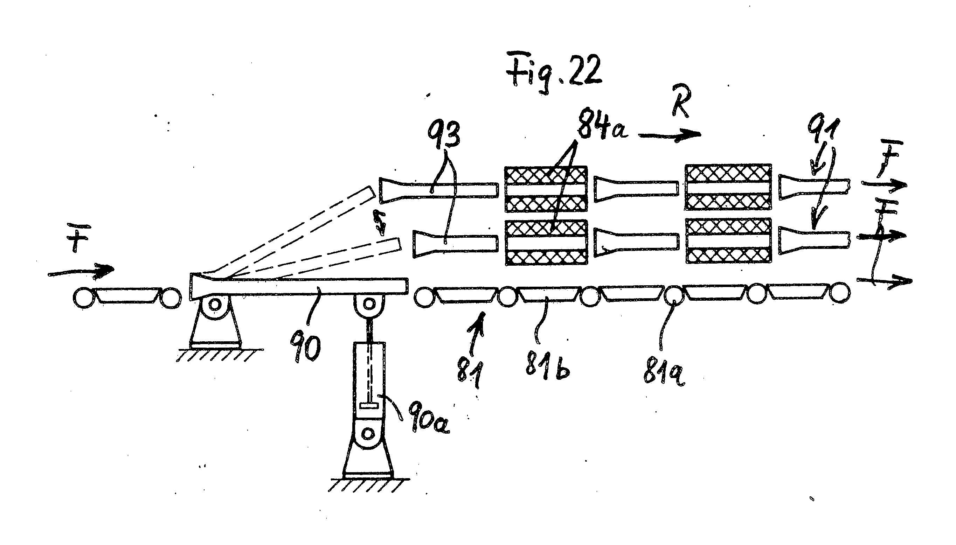

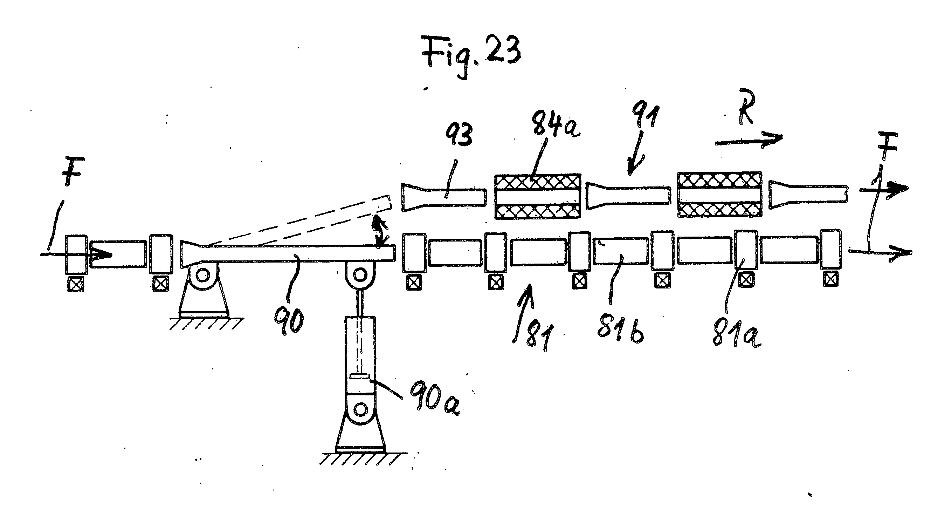

In den Fig. 22 und 23 sind weitere Ausführungsbeispiele der Einrichtung schematisch dargestellt.

In der Fig. 22 ist eine Anordnung von einer oder mehreren Auflaufrinnen 91 parallel zu einem Auflaufrollgang 81 in vertikaler Ebene übereinanderliegend von einem Kühlbett in der Seitenansicht dargestellt.

Die Walzgutlängen W werden in der Förderrichtung R auf dem Auflaufrollgang 81 angefördert und werden dann abhängig von dem Walzgutquerschnitt und/oder der Walzgutgeschwindigkeit über eine vom Kraftmittel 90a bewegliche Weiche 90, beispielsweise eine Rohrweiche oder eine entsprechende schwenkbewegliche Walzgutumführung in eine oder mehrere Auflaufrinnen 91, bestehend aus Rohrführungen 93 und ringförmige Linearmotoren 84a, umgeführt oder laufen über den Auflaufrollgang 81 konventioneller Bauart einem nicht weiter dargestellten Kühlbett zu. Dabei werden die Walzgutlängen W entweder in den Auflaufrinnen 91 mittels der Linearmotoren 84a beschleunigt bzw. abgebremst oder mittels der Förderrollen 81a beschleunigt und durch nicht weiter dargestellte Bremsschieber im Auflaufrollgang 81 abgebremst und anschließend auf ein den Förderlinien F gemeinsames Kühlbett übergefördert.

In der Fig. 23 ist eine Anordnung von einer oder mehreren Auflaufrinnen 91 parallel zu einem Auflaufrollgang 81 in horizontaler Ebene nebeneinanderliegend vor einem Kühlbett in der Draufsicht dargestellt.

Die Anordnung entspricht der in der Fig. 22 dargestellten Ausführung hinsichtlich ihrer baulichen Ausführung. Lediglich sind die Auflaufrinnen 91 in horizontaler Ebene parallel zum Auflaufrollgang 81 angeordnet. Dementsprechend ist die Weiche 90 in horizontaler Ebene schwenkbeweglich ausgebildet.

Die Anordnung von mehreren Auflaufrinnen 91 parallel zueinander ist zweckmäßig, damit die zeitliche Aufeinanderfolge der Walzgutlängen möglichst kurz bemessen werden kann.

**Patentansprüche**

1. Einrichtung zum Geschwindigkeitsändern von auf Förderrollgängen (1, 31, 51, 61, 81, 91) aufliegendem walzwarmem Walzgut (W) vor Kühlbetten (K) durch magnetische Felder, wobei im Bereich der einer Feinstahl- oder Mittelstahl-Walzstraße nachgeordneten Adjustageanlage die Walzgutlängen (W) durch elektromagnetische Kraftwirkung abbremsbar sind, dadurch gekennzeichnet, daß die Walzgutlängen (W) mittels im Bereich der Adjustageanlage angeordneter Linearmotoren (4, 5; 24, 25; 34, 35; 34a, 35a; 34c, 35c; 64, 65; 84, 85) in einem Bereich beschleunigbar und/oder in einem anderen Bereich längs der Förderlinie (F) abbremsbar sind, die Linearmotoren (4, 5; 24, 25; 34, 35; 34a, 35a; 34c, 35c; 64, 65; 84, 85) zur Förderlinie (F) anstellbar bzw. bewegbar ausgebildet sind und das Abbremsen der Walzgutlängen (W) aus einer kombinierten Bremsung zusammengesetzt aus mechanischem und elektromagnetischem Bremsanteil erfolgt.

2. Einrichtung nach Anspruch 1, dadurch gekennzeichnet, daß die Linearmotoren (4, 5; 24, 25; 34, 35; 34a, 35a; 34c, 35c; 64, 65; 84, 85) längs der Förderlinie (F) in horizontaler oder vertikaler Ebene einseitig oder beiderseitig der Förderebene angeordnet sind.

3. Einrichtung nach einem der Ansprüche 1 oder 2, dadurch gekennzeichnet, daß die Linearmotoren (4, 5; 34, 35; 34a, 35a; 34c, 35c) längs der Förderlinie (F) in horizontaler Ebene einseitig oder beiderseitig schräg zur Förderlinie (F) angeordnet sind.

4. Einrichtung nach einem der Ansprüche 1 bis 3, dadurch gekennzeichnet, daß die Linearmotoren (24, 25; 64, 65) im Bereich des Förderrollgangs (1, 31, 51, 61, 81, 91) oder zwischen Förderrollgang (1, 31, 51, 61, 81, 91) und Kühlbett (K) längs der Förderlinie (F) angeordnet sind.

5. Einrichtung nach einem der Ansprüche 1 oder 2, dadurch gekennzeichnet, daß bei den in horizontaler oder vertikaler Ebene beiderseitig zur Förderlinie (F) angeordneten Linearmotoren (4, 5; 24, 25; 34, 35; 34a, 35a; 34c, 35c, 35c; 64, 65; 84) mindestens die oberen oder die einen seitlich der Förderlinie (F) angeordneten Linearmotoren zur bzw. in der Förderebene anstellbar ausgebildet sind.

6. Einrichtung nach einem der vorhergehenden Ansprüche im Bereich einer der Walzstraße nachgeordneten Teilschere (TS), dadurch gekennzeichnet, daß die Linearmotoren (4, 5; 84) im Bereich des Förderrollgangs (1, 81) in der Förderrichtung (R) vor und/oder hinter der Teilschere (TS) zum Beschleunigen der Walzgutlängen (W) oder der Hinterschopfenden angeordnet sind.

7. Einrichtung nach einem der Ansprüche 1 bis 5, dadurch gekennzeichnet, daß die Linearmotoren (4, 5; 34, 35; 34a, 35a; 34c, 35c) im Bereich der Rollenteilung des Auflaufrollgangs (1, 31) wahlweise in mehreren parallelen Längsabschnitten vor und/oder im Bereich des Kühlbettes (K) hinter den Trennmitteln (TM) der aufeinanderfolgenden Walzgutlängen (W) zum kombinierten Abbremsen oder zur Teilbremsung gemeinsam mit heb- und senkbaren mechanischen Bremsmitteln (2, 32) zusammenwirkend angeordnet sind.

8. Einrichtung nach Anspruch 7, dadurch gekennzeichnet, daß die Linearmotoren im Bereich der mechanischen Bremsmittel bildenden einen oder mehreren Bremsschieberabschnitte (32, BS, $BS_1$, $BS_2$) angeordnet sind.

9. Einrichtung nach einem der Ansprüche 1 bis 5, dadurch gekennzeichnet, daß die Linearmotoren (34, 35) in Längsrichtung und/oder schräg zur Förderrichtung (R) im Bereich des Richtplattenrostes (38) zwischen dem Auflaufrollgang (31) und dem Kühlbett (K) angeordnet sind.

10. Einrichtung nach einem der vorhergehenden Ansprüche, dadurch gekennzeichnet, daß in dem Auflaufrollgang (1, 31, 51, 61, 81, 91) des Kühlbettes (K) abwechselnd in den Rollenteilungen ein oder mehrere Abschnitte gruppenweise mit Bremsschiebern (2, 32) und/oder mit Linearmotoren (34, 35) angeordnet sind.

11. Einrichtung nach einem der vorhergehenden Ansprüche, dadurch gekennzeichnet, daß die Linearmotoren (4, 5; 34, 35; 34a, 35a; 34c, 35c) jeweils paarweise zur Förderebene zustellbar und gemeinsam über die Förderebene anhebbar sind.

12. Einrichtung nach einem der vorhergehenden Ansprüche, dadurch gekennzeichnet, daß in dem Auflaufrollgang (1, 31, 51, 61, 91) des Kühlbettes (K) in den Rollenteilungen ausschließlich Linearmotoren (4, 5; 34, 35; 34a, 35a; 34c, 35c; 24, 25; 64, 65; 84, 85) einzeln oder paarweise angeordnet sind.

13. Einrichtung nach einem der vorhergehenden Ansprüche, dadurch gekennzeichnet, daß als Zustellmittel der paarweise einander zugeordneten Linearmotoren (4, 5; 24, 25; 34, 35; 34a, 35a; 34c, 35c; 84, 85) hydraulische bzw.

pneumatische Kolben-Zylindereinheiten (18, 48, 50, 80) bzw. elektromechanische oder mechanische Stellmittel und über diese betätigbare Hebel (4a, 5a, 15, 19, 22, 45, 49, 45a, 95), Exzenter (28, 98), oder dergleichen vorgesehen sind.

14. Einrichtung nach einem der vorhergehenden Ansprüche, dadurch gekennzeichnet, daß die oberhalb der seitlich der Förderlinie (F) angeordneten Linearmotoren (4, 24, 34, 34a, 34c, 84, 84a) nach oben seitlich zum Förder- bzw. Auflaufrollgang hin ausschwenkbar ausgebildet sind.

15. Einrichtung nach einem der vorhergehenden Ansprüche, dadurch gekennzeichnet, daß die Linearmotoren (4, 5; 24, 25; 34, 35; 34a, 35a; 34c, 35c; 64, 65; 84, 85) zur Förderebene hin kammartig ausgebildet und die Kämme bzw. die die Stege (9) der Kämme bildenden Teile quer zur Förderrichtung bzw. schräg verlaufend ausgebildet und mit Polschuhen (10) und/oder mit magnetisch nicht leitenden Führungsschuhen versehen sind.

16. Einrichtung nach einem der vorhergehenden Ansprüche, dadurch gekennzeichnet, daß der untere Linearmotor (5, 35, 35a, 35c, 85) bereits vor Einlaufen der Walzgutlänge in die Förderebene angehoben ist.

17. Einrichtung nach einem der vorhergehenden Ansprüche, dadurch gekennzeichnet, daß die Änderung des elektromagnetischen Wanderfeldes der Linearmotoren abhängig von der zu erzielenden Brems- und/oder Beschleunigungskraft der Walzgutlänge (W) erfolgt.

18. Einrichtung nach einem der vorhergehenden Ansprüche, dadurch gekennzeichnet, daß die Rollgangsrollen der Förder- und Auflaufrollgänge (1, 31) anstelle von Antriebsmotoren von den Linearmotoren (5) angetrieben werden, indem in den dem Rollenumfang zugewandten Stirnseiten der Linearmotoren (5) zusätzliche Ständerwicklungen (10) in Nuten (7a) angeordnet und die Stirnseiten der Linearmotoren (5) die Krümmung der Umfangsflächen der Rollgangsrollen (1a, 31a) entsprechend ausgebildet sind.

19. Einrichtung nach einem der vorhergehenden Ansprüche, dadurch gekennzeichnet, daß die Auflaufrinne (81) aus einer oder mehreren parallelen Linien gebildet wird, deren jede Auflaufrinne (81) allseitig geschlossen und mit einem oder paarweise einander zugeordneten Linearmotoren (84, 85) versehen ist, deren mindestens einer (84) auf die Förderebene (F) der Walzgutlängen (W) anstellbar und nach oben ausschwenkbar ausgebildet ist.

20. Steuerung der Linearmotoren nach einem der vorhergehenden Ansprüche, dadurch gekennzeichnet, daß die Erregung der einen oder mehreren hintereinander angeordneten Linearmotoren (4, 5) abhängig von der Walzgutgeschwindigkeit über einen Umrichter (72) mit veränderlicher Frequenz (Wechselrichter) erfolgt.

21. Steuerung der Linearmotoren nach einem der vorhergehenden Ansprüche, dadurch gekennzeichnet, daß das elektromagnetische Wanderfeld hinsichtlich seiner die Walzgutlängen (W) beschleunigenden oder abbremsenden Wirkrichtung über eine Reversier-Schütz-Steuerung (74) umsteuerbar ist.

22. Steuerung der Linearmotoren nach einem der vorhergehenden Ansprüche, dadurch gekennzeichnet, daß die Linearmotoren als Generatoren wirkend umsteuerbar sind, indem die Frequenz des elektromagnetischen Wanderfeldes soweit gesenkt wird, daß die Fördergeschwindigkeit der Walzgutlängen (W) im übersynchronen Bereich der Linearmotoren liegt.

23. Einrichtung nach Anspruch 1 unter Verwendung von nicht zur Förderlinie (F) anstellbarer Linearmotoren, dadurch gekennzeichnet, daß in der Auflaufrinne (91) bzw. in der Rollenteilung längs der Förderlinie (F) eines Auflaufrollgangs (81), die Förderlinie (F) umschließendm ringförmige Linearmotoren (84a) (Polysolenoid) angeordnet sind.

24. Einrichtung nach Anspruch 23, dadurch gekennzeichnet, daß die ringförmigen Linearmotoren (84a) abhängig vom Walzgutquerschnitt und/oder von der Walzgutgeschwindigkeit aus der Förderlinie (F) ausbringbar sind.

25. Einrichtung nach einem der Ansprüche 23 oder 24, dadurch gekennzeichnet, daß längs der Auflaufrinne (91) bzw. in der Rollenteilung des Auflaufrollgangs (81) längs der Förderlinie (F) mehrere ringförmige Linearmotoren (84a) angeordnet sind.

26. Einrichtung nach einem der Ansprüche 23 bis 25, dadurch gekennzeichnet, daß abhängig von dem Walzgutquerschnitt und/oder von der Walzgutgeschwindigkeit die Walzgutlängen (W) mittels einer schwenkbeweglichen Weiche (90) entweder in einer oder mehrere mit ringförmigen Linearmotoren (84a) und Rohrführungen (93) ausgebildeten Auflaufrinnen (91) oder in einen gleichgerichteten Auflaufrollgang (81) mit Bremsschiebern (81b) in der Rollenteilung umleitbar sind.

27. Einrichtung nach einem der vorhergehenden Ansprüche, dadurch gekennzeichnet, daß wechselweise ringförmige Linearmotoren (84a) oder Plattenbeläge (81b) in die Förderlinie (F) im Bereich der Rollenteilung einbringbar sind.

28. Einrichtung nach einem der vorhergehenden Ansprüche, dadurch gekennzeichnet, daß mehrere Auflaufrinnen (91) mit ringförmigen Linearmotoren (84a) parallel zueinander angeordnet sind.

## Claims

1. A device for altering the velocity of hot rolled material (W) on roll tables (1, 31, 51, 61, 81, 91) in front of cooling beds (K) by magnetic fields, the lengths of rolled material (W) being retarded in the region of the adjustment apparatus disposed downstream of a small or medium section rolling mill by the effect of electromagnetic forces, characterized in that the lengths of rolled material (W) may be accelerated in one region and/or retarded in another region along the conveying line (F) by means of linear motors (4, 5; 24, 25; 34, 35; 34a, 35a; 34c, 35c; 64, 65; 84, 85) disposed in the region of the adjustment apparatus, the linear motors (4, 5; 24, 25; 34, 35; 34a, 35a; 34c, 35c; 64, 65; 84, 85) are made so as to be adjustable or movable with respect to the conveying line (F), and the lengths of rolled material (W) are retarded by a combined retardation consisting of mechanical and electromagnetic retarding components.

2. A device according to Claim 1, characterized in that the linear motors (4, 5; 24, 25; 34, 35; 34a, 35a; 34c, 35c; 64, 65; 84, 85) are disposed along the conveying line (F) in a horizontal or vertical plane on one or both sides of the conveying line.

3. A device according to one of Claims 1 or 2, characterized in that the linear motors (4, 5; 34, 35; 34a, 35a; 34c, 35c) are disposed along the conveying line (F) in a horizontal plane on one or both sides obliquely to the conveying line (F).

4. A device according to any one of Claims 1 to 3, characterized in that the linear motors (24, 25; 64, 65) are disposed along the conveying linie (F) in the region of the roll table (1, 31, 51, 61, 81, 91) or between the roll table (1, 31, 51, 61, 81, 91) and the cooling bed (K).

5. A device according to one of Claims 1 or 2, characterized in that where the linear motors (4, 5; 24, 25; 34, 35; 34a, 35a; 34c, 35c; 64, 65; 84) are disposed on both sides of the conveying line (F) in the horizontal or vertical plane at least the upper linear motors or those disposed on side of the conveying line (F) are made so as to be adjusted with respect to or in the conveying line.

6. A device according to to any one of the preceding Claims in the region of separating shears (TS) arranged downstream of the rolling mill, characterized in that the linear motors (4, 5; 84) are disposed in the region of the roll table (1, 81) in front of and/or behind the separating shears (TS) in the conveying direction (R) in order to accelerate the lengths of rolled material (W) or the rear cutoff ends.

7. A device according to any one of Claims 1 to 5, characterized in that the linear motors (4, 5; 34, 35; 34a, 35a; 34c, 35c) are disposed in the region of the roll spacing of the live-roller feed bed (1, 31) optionally in a plurality of parallel longitudinal portions in front of and/or in the region of the cooling bed (K) behind the separating means (TM) of the successive lengths of rolled material (W) for the combined retardation or the partial retardation so as to cooperate together with mechanical retarding means (2, 32) which may be raised or lowered.

8. A device according to Claim 7, characterized in that the linear motors are disposed in the region of the mechanical retarding means forming one or more retarding slide portions (32, BS, BS₁, BS₂).

9. A device according to any one of Claims 1 to 5, characterized in that the linear motors (34, 35) are disposed in the longitudinal direction and/or obliquely to the conveying direction (R) in the region of the straightening plate grid (38) between the live-roller feed bed (31) and the cooling bed (K).

10. A device according to any one of preceding Claims, characterized in that in the live-roller feed bed (1, 31, 51, 61, 81, 91) of the cooling bed (K) alternately in the roll spacings one or more portions are disposed in groups with retarding slides (2, 32) and/or with linear motors (34, 35).

11. A device according to any one of the preceding Claims, characterized in that the linear motors (4, 5; 34, 35; 34a, 35a; 34c, 35c) may be set in respective pairs to the conveying plane and may be raised jointly above the conveying plane.

12. A device according to any one of the preceding Claims, characterized in that exclusively linear motors (4, 5; 34, 35; 34a, 35a; 34c, 35c; 24, 25; 64, 65; 84, 85) are arranged individually or in pairs in the live-roller feed bed (1, 31, 51, 61, 91) of the cooling bed (K) in the roll spacings.

13. A device according to any one of the preceding Claims, characterized in that hydraulic or pneumatic piston-cylinder units (18, 48, 50, 80) or electromechanical or mechanical adjusting means and levers (4a, 5a, 15, 19, 22, 45, 49, 45a, 95) actuable thereby, eccentrics (28, 98) or the like are provided as setting means of the linear motors (4, 5; 24, 25; 34, 35; 34a, 35a; 34c, 35c; 84, 85) associated with one another in pairs

14. A device according to any one of the preceding Claims, characterized in that the linear motors (4, 24, 34, 34a, 34c, 84, 84a) disposed above or laterally to the conveying line (F) are made so as to be swung out laterally upwards with respect to the roll table or live-roller feed bed.

15. A device according to any one of the preceding Claims, characterized in that the linear motors (4 , 5; 24, 25; 34, 35; 34a, 35a; 34c, 35c; 64, 65; 84, 85) are made comb-like towards the vonveying plane and the combs or the parts forming the teeth (9) of the combs are made to extend transversely to the conveying direction or obliquedly and are provided with pole shoes (10) and/or with magnetically nonconducting guide shoes.

16. A device according to any one of the preceding Claims, characterized in that the lower linear motor (5, 35, 35a, 35c, 85) is already raised to the conveying plane before the entry of the length of rolled material.

17. A device according to any one of the preceding Claims, characterized in that the electromagnetic travelling field of the linear motors is changed as a function of the retardation and/or acceleration force to be achieved for the length of rolled material (W).

18. A device according to any one of the preceding Claims, characterized in that the roll table rolls of the roll tables and live-roller feed beds (1, 31) are driven by the linear motor (5) instead of drive motors, as additional stator windings (10) are disposed in grooves (7a) in the ends of the linear motors (5) facing the roller periphery and ends of the linear motors (5) are made corresponding to the curvature of the peripheral surfaces of the roll table rolls (1a, 31a).

19. A device according to any one of the preceding Claims, characterized in that the approach channel (81) is formed from one or more parallel lines, each approach channel (81) of which is closed on all sides and is provided with one linear motor or linear motors (84, 85) associated with one another in pairs, at least one (84) of which is made so as to be adjusted to the conveying plane (F) of the lengths of rolled material (W) and to be swung out upwards.

20. Control of the linear motors according to any one of the preceding Claims, characterized in that one linear motor or a plurality of linear motors (4, 5) arranged one behind another is or are actuated as a function of the velocityl of the rolled material by way of a converter (72) with a variable frequency (inverter).

21. Control of the linear motors according to to any one of the preceding Claims, characterized in that the electromagnetic travelling field is reversible by way of a reversing-protection control (74) with respect to its operating direction for accelerating or retarding the lengths of rolled material (W).

22. Control of the linear motors according to to any one of the preceding Claims, characterized in that the linear motors may be reversed to act as generators, as the frequency of the electromagnetic travelling field is reduced to the extent that the conveying velocity of the lengths of rolled material (W) is in the hypersynchronous range of the linear motors.

23. A device according to Claim 1 using linear motors not adjustable with respect to the conveying line (F), characterized in that annular linear motors (84a) (polysolenoid) are disposed in the approach channel (91) or in the roll spacing along the conveying line (F) of a live-roller feed bed (81), surrounding the conveying line (F).

24. A device according to Claim 23, characterized in that the annular linear motors (84a) may be moved out of the conveying line. (F) as a function of the cross-section of the rolled material and/or the velocity of the rolled material.

25. A device according to one of Claims 23 or 24, characterized in that a plurality of annular linear motors (84a) are disposed along the approach channel (91) or in the roll spacings of the live-roller feed bed along the conveying line (F).

26. A device according to any one of Claims 23 to 25, characterized in that depending upon the crosssection of the rolled material and/or the velocity of the rolled material the lengths of rolled material (W) may be diverted by means of a pivotable diverter (90) either into one or more approach channels (91) formed with annular linear motors (84a) and tubular guides (93) or into a similarly orientated live-roller feed bed (81) with retaration slides (81b) in the roll spacings.

27. A device according to any one of the preceding Claims, characterized in that alternately annular linear motors (84a) or plates (81b) may be inserted into the conveying line (F) in the region of the roll spacings.

28. A device according to any one of the preceding Claims, characterized in that a plurality of approach channels (91) with annular linear motors (84a) are arranged paralllel to one another.

## Revendications

1. Dispositif pour faire varier la vitesse d'un produit laminé (W) à la température du laminage, appuyé sur des tables à rouleaux de transport (1, 31, 51, 61, 81, 91) en amont de lits de refroidissement (K) au moyen de champs magnétiques, les longueurs de produit laminé (W) pouvant être freinées par un effet dynamique électromagnétique dans la région d'une installation de parachèvement placée en aval d'un train de laminoir à petits fers ou à fers moyens, caractérisé en ce que les longueurs de produit laminé (W) peuvent être accélérées dans une région et/ou freinées dans une autre région le long de la ligne de transport (F) au moyen de moteurs linéaires (4, 5; 24, 25; 34, 35; 34a, 35a; 34c, 35c; 64, 65; 84, 85) disposés dans la région de l'installation de parachèvement, les moteurs linéaires (4, 5; 24, 25; 34, 35; 34a, 35a, 34c, 35c; 64, 65; 84, 85) sont construits de façon à pouvoir être rapprochés ou déplacés par rapport à la ligne de transport (F) et le freinage des longueurs de produir laminé (W) s'effectuant par un freinage combiné composé d'une fraction de freinage mécanique et d'une fraction de freinage électromagnétique.

2. Dispositif selon la revendication 1, caractérisé en ce que les moteurs linéaires (4, 5; 24, 25; 34, 35; 34a, 35a; 34c, 35c; 64, 65; 84, 85) sont disposés le long de la ligne de transport (F) dans un plan horizontal ou vertical d'un côté ou des deux côtés du plan de transport.

3. Dispositif selon l'une des revendications 1 et 2, caractérisé en ce que les moteurs linéaires (4, 5; 24, 25; 34, 35; 34a, 35a; 34c, 35c) sont disposés le long de la ligne de transport (F) dans un plan horizontal, d'un côté ou des deux côtés, obliquement à la ligne de transport (F).

4. Dispositif selon l'une des revendications 1 à 3, caractérisé en ce que les moteurs linéaires (24, 25; 64, 65) sont disposés le long de la ligne de transport (F) dans la région de la table à rouleaux de transport (1, 31, 51, 61, 81, 91) ou entre la table à rouleaux de transport (1, 31, 51, 61, 81, 91) et le lit de refroidissement (K).

5. Dispositif selon l'une des revendications 1 et 2, caractérisé en ce que, dans le cas des moteurs linéaires (4, 5; 24, 25; 34, 35; 34a, 35a; 34c, 35c 64, 65; 84, 85) disposés dans un plan horizontal ou vertical des deux côtés de la ligne de transport (F), au moins les moteurs linéaires supérieurs ou les moteurs linéaires disposés latéralement à la ligne de transport (F) sont réalisés pour pouvoir être réglés en position par rapport au plan de transport ou dans le plan de transport.

6. Dispositif selon l'une des revendications précédentes, placé dans la région d'une cisaille à tronçonner (TS) placée en aval du train de laminoirs, caractérisé en ce que les moteurs linéaires (4, 5; 84) sont disposés dans la région de la table à rouleaux de transport (1, 81), en amont et/ou en aval de la cisaille à tronçonner (TS), dans le sens du transport (R), pour accélérer les longueurs de produit laminé (W) ou les extrémités éboutées arrière.

7. Dispositif selon l'une des revendications 1 à 5, caractérisé en ce que les moteurs linéaires (4, 5; 34, 35; 34a, 35a, 34c, 35c) sont disposés dans la région des intervalles entre rouleaux de la table à rouleaux d'entrée (1, 31), au choix dans plusieurs segments longitudinaux parallèles, en amont et/ou dans la région du lit de refroidissement (K) en aval des moyens de séparation tion (TM) des longueuts de produit laminé successives (W) pour le freinage combiné ou pour le freinage partiel en coopérant conjointement avec des moyens de freinage mécaniques relevables et abaissables (2, 32).

8. Dispositif selon la revendication 7, caractérisé en ce que les moteurs linéaires sont disposés dans la région d'un ou plusieurs segments coulisseaux de freinage (32, BS, $BS_1$, $BS_2$) qui forment les moyens de freinage mécaniques.

9. Dispositif selon l'une des revendications 1 à 5, caractérisé en ce que les moteurs linéaires (34, 35) sont disposés dans la direction longitudinale et/ou obliquement à la direction de transport (R), dans la région de la grille de plaques de dressage (38) entre la table à rouleaux d'entrée (31) et le lit de refroidissement (K).

10. Dispositif selon l'une des revendications précédentes, caractérisé en ce que, dans la table à rouleaux d'entrée (1, 31, 51, 61, 81, 91) du lit de refroidissement (K), sont disposés en alternance dans les intervalles entre rouleaux, un ou plusieurs segments munis par groupes de coulisseaux de freinage (2, 32) et/ou de moteurs linéaires (34, 35).

11. Dispositif selon l'une des revendications précédentes, caractérisé en ce que les moteurs linéaires (4, 5; 34, 35; 34a, 35a; 34c, 35c) peuvent être rapprochés du plan de transport par paires et relevés conjointement au-dessus du plan de transport.

12. Dispositif selon l'une des revendications précédentes, caractérisé en ce que, dans la table à rouleaux d'entrée (1, 31, 51, 61, 81, 91) du lit de refroidissement (K), dans les intervalles des rouleaux, sont exclusivement disposés des moteurs linéaires (4, 5; 34, 35; 34a, 35a; 34c, 35c; 24, 25; 64, 65; 84, 85), individuellement ou par paires.

13. Dispositif selon l'une des revendications précédentes, caractérisé en ce que, en tant que moyens de rapprochement des moteurs linéaires (4, 5; 24, 25; 34, 35; 34a, 35a; 34c, 35c; 84, 85) associées les uns aux autres par paires, sont prévues des unités à pistoncylindre (18, 48, 50, 80) hydrauliques ou pneumatiques ou des moyens de réglage électromécaniques ou mécaniques et des leviers (4a, 5a, 15, 19, 22, 45, 49, 45a, 95), des excentriques (28, 98), ou équivalents, pouvant être actionnés par ces unités ou moyens.

14. Dispositif selon l'une des revendications précédentes, caractérisé en ce que les moteurs linéaires (4, 24, 34, 34a, 34c, 84, 84a) disposés au-dessus de la ligne de transport (F) ou latéralement à cette ligne sont réalisés de façon à pouvoir être dégagés par pivotement vers le haut et latéralement à la table à rouleaux de transport ou d'entrée.

15. Dispositif selon l'une des revendications précédentes, caractérisé en ce que les moteurs linéaires (4, 5; 24, 25; 34, 35; 34a, 35a; 34c, 35c; 64, 65; 84, 85) sont réalisés en forme de peignes dirigés vers le plan du transport et que les peignes ou les parties formant les dents (9) des peignes sont réalisés orientés transversalement à la direction de transport ou orientés obliquement et sont munis de pièces polaires (10) et/ou de patins de guidage non conducteurs du magnétisme.

16. Dispositif selon l'une des revendications précédentes, caractérisé en ce que le moteur linéaire inférieur (5, 35, 35a, 35c, 85) est déjà relevé dans le plan du transport avant l'arrivée de la longueur de produit laminé.

17. Dispositif selon l'une des revendications précédentes, caractérisé en ce que la modification du champ glissant électromagnétique des moteurs linéaires s'effectue en fonction de la force de freinage et/ou d'accélération de la longueur de produit laminé (W) à obtenir.

18. Dispositif selon l'une des revendications précédentes, caractérisé en ce que les rouleaux de tables à rouleaux des tables à rouleaux de transport et d'entrée (1, 31) sont entraînés par les moteurs linéaires (5) en remplacement de moteurs d'entraînement par le fait que, dans les faces frontales des moteurs linéaires (5) dirigées vers la périphérie des rouleaux, des enroulements de stators additionnels (10) sont disposés dans les encoches (7a) et que les faces frontales des moteurs linéaires (5) sont réalisées conformément à la courbure des surfaces périphériques des rouleaux (1a, 31a) des tables à rouleaux.

19. Dispositif selon l'une des revendications précédentes, caractérisé en ce que la goulotte d'entrée (81) est formée d'une ou plusieurs lignes parallèles dont chaque goulotte d'entrée (81) est fermée de tous côtés et munie d'un ou de plusieurs moteurs linéaires (84, 85) associés entre eux par paires, dont au moins l'un (84) peut être rapproché du plan de transport (F) des longueurs de produit laminé (W) et est réalisé de façon à pouvoir —etre dégagé par pivotement vers le haut.

20. Commande des moteurs linéairess selon l'une des revendications précédentes, caractérisée en ce que l'excitation de l'un ou de plusieurs moteurs linéaires (4, 5) disposés l'un à la suite de l'autre d'effectue en fonction de la vitesse du produit laminé, par l'intermédiaire d'un mutateur (72) à fréquence variable (onduleur).

21. Commande des moteurs linéaires selon l'une des revendications précésentes, caractérisée en ce que le champ glissant électromagnétique peut être inversé, en ce qui concerne son sens d'action accélérant ou freinant les longueurs de produit laminé (W), par l'intermédiaire d'une commande (74) formant inverseur-disjoncteur.

22. Commande des moteurs linéaires selon l'une des revendications précédentes, caractérisée en ce que les moteurs linéaires peuvent être inversés pour agir en génératrices, par le fait que la fréquence du champ glissant électromagnétique est abaissée à tel point que la vitesse de transport des longueurs de produit laminé (W) se trouve dans la région sursynchrone des moteurs linéaires.

23. Dispositif selon la revendication 1, avec utilisation de moteurs linéaires ne pouvant pas être réglés en position par rapport à la ligne de transport (F) caractérisé en ce que, dans la goulotte d'entrée (91) ou dans les intervalles entre rouleaux le long de la ligne de transport (F) d'une table à rouleaux d'entrée (81), sont disposés des moteurs linéaires annulaires (84a) (polysolénoides) qui entourent la ligne de transport (F).

24. Dispositif selon la revendication 23, caractérisé en ce que, selon la section du produit laminé et/ou la vitesse du produit laminé, les moteurs linéaires annulaires (84a) peuvent être extraits de la ligne de transport (F).

25. Dispositif selon l'une des revendications 23 et 24, caractérisé en ce que, le long de la goulotte d'entrée (91) ou dans les intervalles entre rouleaux de la table à rouleaux d'entrée (81), plusieurs moteurs linéaires annulaires (84a) sont disposés le long de la ligne de transport (F).

26. Dispositif selon l'une des revendications 23 à 25, caractérisé en ce que, selon la section du produit laminé et/ou la vitesse du produit laminé, les longueurs de produit laminé (W) peuvent être déviées au moyen d'un aiguillage (90) mobile par pivotement, soit dans une ou plusieurs goulottes d'entrée (91) réalisées avec des moteurs linéaires annulaires (84a) et des guides tubulaires (93), soit dans une table à rouleaux d'entrée redressée (81) munie de coulisseaux de freinage (81b) dans les intervalles entre rouleaux.

27. Dispositif selon l'une des revendications précédentes, caractérisé en ce que des moteurs linéaires annulaires (84a) ou des garnitures de plaques (81b) peuvent être montés alternativement dans la ligne de transport (F) dans la région des intervalles entre rouleaux.

28. Dispositif selon l'une des revendications précédentes, caractérisé en ce que plusieurs goulottes d'entrée (91) munies de moteurs linéaires annulaires (84a) sont disposées parallèlement entre elles.

Fig. 1

Fig. 2

Fig. 1a

Fig. 1b

Fig. 3

Fig. 4

Fig. 5

Fig. 6

0 031 105

Fig. 7

Fig. 8

Fig. 9

Fig. 10

Fig. 11

Fig. 12

Fig. 13

Fig. 14

R →

1

31 (51,61)

37

TM

34 (35)

32 (BS)

34 (35)

Re

K

Fig. 18

88

86

83

83

87

80a

84

84

81

S

W

80

85

85

82

82

Fig. 15

70 71 72

70a
71a
72a

74a

75a

76a

7

8

8a 8b 8c 9(10) 7

4(s)

43

0 031 105

Fig. 16

4(s)

3~

50 Hz

3~

15...105 Hz

70        71        72

Fig. 17

4(s)

50 Hz

50 Hz

74

Fig. 19

# Fig. 20

94

96

95

96a

98

97a

84a

81(91)

W

81b

97

81a

Fig. 21

Fig.22

Fig. 23